(19) Europäisches Patentamt
European Patent Office
Office européen des brevets

(11) **EP 4 664 456 A1**

(12) **EUROPEAN PATENT APPLICATION**
published in accordance with Art. 153(4) EPC

(43) Date of publication:
**17.12.2025 Bulletin 2025/51**

(51) International Patent Classification (IPC):
**G10L 21/028** (2013.01)  **G10L 21/0272** (2013.01)
**G10L 15/16** (2006.01)

(21) Application number: **24763183.1**

(22) Date of filing: **28.02.2024**

(86) International application number:
**PCT/CN2024/078946**

(87) International publication number:
**WO 2024/179503 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2023 CN 202310228312**

(71) Applicant: **Huawei Technologies Co., Ltd.
Shenzhen, Guangdong 518129 (CN)**

(72) Inventors:
• **DENG, Liqun**
  **Shenzhen, Guangdong 518129 (CN)**
• **AO, Junyi**
  **Shenzhen, Guangdong 518172 (CN)**
• **GE, Meng**
  **Shenzhen, Guangdong 518172 (CN)**
• **LI, Haizhou**
  **Shenzhen, Guangdong 518172 (CN)**
• **YEUNG, Yu Ting**
  **Shenzhen, Guangdong 518129 (CN)**
• **CHEN, Xiao**
  **Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **SPEECH PROCESSING METHOD AND RELATED DEVICE**

(57)     A speech processing method and a related device thereof are provided, so that two types of tasks: speaker diarization and target speaker speech extraction, can be simultaneously supported, thereby helping reduce design costs of speech processing. The method includes: obtaining a mixed speech and a reference speech of a target object, where the mixed speech includes a speech of the target object and a speech of another object other than the target object (501); processing the mixed speech, the reference speech, and an intermediate output of a second model by using a first model, to obtain an intermediate output of the first model and a final output of the first model, where the final output of the first model is used to obtain the speech of the target object (502); and processing the mixed speech and the intermediate output of the first model by using the second model, to obtain the intermediate output of the second model and a final output of the second model, where the final output of the second model is used to determine a position of the speech of the target object in the mixed speech (503).

```
┌─────────────────────────────────────────────┐
│ Obtain a mixed speech and a reference speech │──  501
│ of a target object, where the mixed speech   │
│ includes a speech of the target object and a │
│ speech of another object other than the      │
│ target object                                │
└─────────────────────────────────────────────┘
                      ↓
┌─────────────────────────────────────────────┐
│ Process the mixed speech, the reference      │──  502
│ speech, and an intermediate output of a      │
│ second model by using a first model, to      │
│ obtain an intermediate output of the first   │
│ model and a final output of the first model, │
│ where the final output of the first model is │
│ used to obtain the speech of the target      │
│ object                                       │
└─────────────────────────────────────────────┘
                      ↓
┌─────────────────────────────────────────────┐
│ Process the mixed speech and the             │──  503
│ intermediate output of the first model by    │
│ using the second model, to obtain the        │
│ intermediate output of the second model and  │
│ a final output of the second model, where    │
│ the final output of the second model is used │
│ to determine a position of the speech of the │
│ target object in the mixed speech            │
└─────────────────────────────────────────────┘
```

FIG. 5

EP 4 664 456 A1

## Description

This application claims priority to Chinese Patent Application No. 202310228312.7, filed with the China National Intellectual Property Administration on February 28, 2023 and entitled "SPEECH PROCESSING METHOD AND RELATED DEVICE THEREOF", which is incorporated herein by reference in its entirety.

## TECHNICAL FIELD

Embodiments of this application relate to the field of artificial intelligence (artificial intelligence, AI) technologies, and in particular, to a speech processing method and a related device thereof.

## BACKGROUND

It is a common scenario in which a plurality of speakers in a same space speak separately or simultaneously to generate a mixed speech. Tasks such as content understanding of the mixed speech and speech separation of different speakers have always been very challenging problems in the speech field. These problems are resolved by using a neural network model in an AI technology.

For example, a speaker diarization (speaker diarization) task mainly resolves a problem of "who speak when". In this task, after the mixed speech is processed by using the neural network model, a position of a speech of each speaker in the mixed speech, namely, a timestamp corresponding to the speech of each speaker, may be obtained. For another example, in a target speaker speech extraction (target speaker extraction) task, after the mixed speech is processed by using the neural network model, a speech of a target speaker may be extracted from the mixed speech.

For the foregoing two tasks, specific neural network models are designed for different tasks in a related technology. Consequently, design costs of speech processing are high.

## SUMMARY

Embodiments of this application provide a speech processing method and a related device thereof, so that two types of tasks: speaker diarization and target speaker speech extraction, can be simultaneously supported, thereby helping reduce design costs of speech processing.

A first aspect of embodiments of this application provides a speech processing method. The method includes: When a user needs to perform speaker diarization and target speaker speech extraction on a mixed speech, the user may first obtain the to-be-processed mixed speech input by the user, where the mixed speech includes a speech of a target object and a speech of another object other than the target object, in other words, the mixed speech is a speech obtained by mixing the speech corresponding to the target and the speech of another object. After the mixed speech is obtained, a reference speech of the target object may be further obtained. Therefore, the mixed speech may be processed by using the reference speech corresponding to the target.

After the mixed speech and the reference speech of the target object are obtained, the mixed speech and the reference speech of the target object may be input into a target model. In this case, a first model in the target model processes the mixed speech, the reference speech, and an intermediate output of a second model, to obtain an intermediate output of the first model and a final output of the first model. In addition, the second model in the target model may process the mixed speech and the intermediate output of the first model, to obtain the intermediate output of the second model and a final output of the second model. In this way, the final output of the first model may be used to obtain the speech, of the target object, included in the mixed speech, and the final output of the second model may also be used to determine a position of the speech of the target object in the mixed speech, namely, a timestamp corresponding to the speech of the target object in the mixed speech. Therefore, the speaker diarization and the target speaker speech extraction for the mixed speech are completed.

It can be seen from the foregoing method that, after the mixed speech needs to be processed, the mixed speech and the reference speech of the target object may be first obtained, where the mixed speech includes the speech of the target object and the speech of another object other than the target object. Then, the mixed speech and the reference speech may be input into the target model. In this case, the first model in the target model may process the mixed speech, the reference speech, and the intermediate output of the second model, to obtain the intermediate output of the first model and the final output of the first model. In addition, the second model in the target model may process the mixed speech and the intermediate output of the first model, to obtain the intermediate output of the second model and the final output of the second model. Finally, the final output of the first model may be used to obtain the speech of the target object, and the final output of the second model may also be used to determine the position of the speech of the target object in the mixed speech. It can be learned from the foregoing process that, the first model and the second model are used as two branches in the target model; and in a process of separately processing the mixed speech, cross fusion of the intermediate outputs is implemented, to jointly complete two types of tasks: speaker diarization and target speaker speech extraction, for the mixed speech. It can be learned that a new model framework, namely, the target model, provided in this embodiment of this application can simultaneously support the two types of tasks: the speaker diarization and the target speaker speech extraction, thereby helping reduce design costs of speech processing.

In a possible implementation, processing the mixed speech, the reference speech, and the intermediate output of the second model, to obtain the intermediate output of the first model and the final output of the first model includes: performing first processing on the mixed speech and the reference speech, to obtain the intermediate output of the first model; and performing second processing on the intermediate output of the first model and the intermediate output of the second model, to obtain the final output of the first model. In the foregoing implementation, after obtaining the mixed speech and the reference speech of the target object, the first model may first perform first processing on the mixed speech and the reference speech of the target object, to obtain the intermediate output of the first model, and send the intermediate output of the first model to the second model. Then, the first model may further receive the intermediate output of the second model, and perform second processing on the intermediate output of the first model and the intermediate output of the second model, to obtain the final output of the first model.

In a possible implementation, processing the mixed speech and the intermediate output of the first model, to obtain the intermediate output of the second model and the final output of the second model includes: performing third processing on the mixed speech and the intermediate output of the first model, to obtain the intermediate output of the second model; and performing fourth processing on the intermediate output of the second model, to obtain the final output of the second model. In the foregoing implementation, after obtaining the mixed speech and the intermediate output of the first model, the second model may first perform third processing on the mixed speech and the intermediate output of the first model, to obtain the intermediate output of the second model, and send the intermediate output of the second model to the first model. Then, the second model may perform fourth processing on the intermediate output of the second model, to obtain the final output of the second model.

In a possible implementation, the first processing includes at least one of the following: encoding and processing based on a recurrent neural network, and the second processing includes at least one of the following: splicing, processing based on a recurrent neural network, mask prediction, and decoding. In the foregoing implementation, the first model in the target model includes a speaker encoder, an extraction encoder, a first dual path recurrent neural network, a first splicing module, a second dual path recurrent neural network, a mask module, a multiplication module, and an extraction decoder. In this case, after obtaining the mixed speech, the extraction encoder may encode the mixed speech, to obtain a first feature of the mixed speech, and send the first feature to the first dual path recurrent neural network. After obtaining the reference speech of the target object, the speaker encoder may encode the reference speech of the target object, to obtain a feature of the reference speech of the target object, and send the feature of the reference speech of the target object to the first dual path recurrent neural network. After receiving the first feature of the mixed speech and the feature of the reference speech, the first dual path recurrent neural network may perform a series of processing on the first feature of the mixed speech and the feature of the reference speech, to obtain a second feature of the mixed speech (namely, the intermediate output of the first model), and send the second feature of the mixed speech to the first splicing module and a second splicing module. It should be noted that the first splicing module may also receive a seventh feature of the mixed speech from a second bidirectional long short term memory network. After obtaining the second feature of the mixed speech and the seventh feature of the mixed speech, the first splicing module may splice the second feature of the mixed speech and the seventh feature of the mixed speech, to obtain a third feature of the mixed speech, and send the third feature of the mixed speech to the second dual path recurrent neural network. After obtaining the third feature of the mixed speech, the second dual path recurrent neural network may perform a series of processing on the third feature of the mixed speech, to obtain a fourth feature of the mixed speech, and send the fourth feature of the mixed speech to the mask module. After obtaining the fourth feature of the mixed speech, the mask module may predict a time domain mask of the mixed speech based on the fourth feature of the mixed speech, and send the time domain mask to the multiplication module. After obtaining the time domain mask, the multiplication module may multiply the first feature of the mixed speech by the time domain mask, to remove a feature of the speech of another object from the first feature of the mixed speech to obtain a feature of the speech of the target object, and send the feature of the speech of the target object to the extraction decoder. After obtaining the feature of the speech of the target object, the extraction decoder may decode the feature of the speech of the target object, to obtain the speech of the target object, namely, the final output of the first model.

In a possible implementation, the third processing includes at least one of the following: processing based on a bidirectional long short term memory network, and the fourth processing includes at least one of the following: splicing, processing based on a bidirectional long short term memory network, and linear computation. In the foregoing implementation, the second model in the target model includes a first bidirectional long short term memory network, a second splicing module, a second bidirectional long short term memory network, and a linear module. In this case, after obtaining the mixed speech, the first bidirectional long short term memory network may perform a series of processing on the mixed speech, to obtain a fifth feature of the mixed speech, and send the fifth feature of the mixed speech to the second splicing module. It should be noted that the second splicing module may also receive the second feature of the mixed speech from the first dual path recurrent neural network. After obtaining the second feature of the mixed speech and the fifth feature of the mixed speech, the second splicing module may splice the second feature of the mixed speech and the fifth feature of the mixed speech to obtain a sixth feature of the mixed speech, and send the sixth feature of the mixed speech to the second bidirectional long short term memory network. After obtaining the sixth feature of the mixed speech, the second bidirectional long short term memory network may perform a series of processing on the sixth feature of the mixed speech, to obtain the seventh feature of the mixed speech, and send the seventh feature of the mixed speech to the first splicing module and the linear module. After obtaining the seventh feature of the mixed speech, the linear module may perform a linear operation on the seventh feature of the mixed speech, to obtain probabilities that speech frames in the mixed speech belong to the target object, namely, the final output of the second model.

In a possible implementation, the method further includes: performing upsampling on the intermediate output of the second model by using a third model, to obtain an upsampled intermediate output of the second model; and processing the mixed speech, the reference speech, and the intermediate output of the second model, to obtain the intermediate output of the first model and the final output of the first model includes: processing the mixed speech, the reference speech, and the upsampled intermediate output of the second model, to obtain the intermediate output of the first model and the final output of the first model. In the foregoing implementation, the target model includes the third model disposed between the first model and the second model. In this case, after the second model sends the intermediate output of the second model to the third model, the third model may perform upsampling on the intermediate output of the second model, to obtain the upsampled intermediate output of the second model, and send the upsampled intermediate output to the first model. In this way, the first model may process the intermediate output of the first model and the upsampled intermediate output of the second model, to obtain the final output of the first model.

In a possible implementation, the method further includes: performing downsampling on the intermediate output of the first model by using the third model, to obtain a downsampled intermediate output of the first model; and processing the mixed speech and the intermediate output of the first model, to obtain the intermediate output of the second model and the final output of the second model includes: processing the mixed speech and the downsampled intermediate output of the first model, to obtain the intermediate output of the second model and the final output of the second model. In the foregoing implementation, the target model includes the third model disposed between the first model and the second model. In this case, after the first model sends the intermediate output of the first model to the third model, the third model may perform downsampling on the intermediate output of the first model, to obtain the downsampled intermediate output of the first model, and send the downsampled intermediate output to the second model. In this way, the second model may process the mixed speech and the downsampled intermediate output of the first model, to obtain the intermediate output of the second model.

In a possible implementation, obtaining the reference speech of the target object includes: obtaining information about the target object, where the information includes at least one of the following: an image of the target object, a text of the target object, and an identifier of the target object; and obtaining, in a preset speech library, the reference speech of the target object corresponding to the information. In the foregoing implementation, if the user specifies the target object, the information, about the target object, input by the user may be obtained. The information about the target object includes at least one of the following: the image of the target object, the text of the target object, and the identifier of the target object. In this case, the preset speech library may be opened, and the speech library not only includes information about a plurality of objects, but also includes speeches registered by the plurality of objects in the speech library. It can be seen that the information about the plurality of objects and the plurality of registered speeches are in a one-to-one correspondence. Then, the speech library is traversed by using the information about the target object as an index, to find a speech corresponding to the information about the target object, and the speech is used as the reference speech of the target object.

In a possible implementation, obtaining the reference speech of the target object includes: dividing the mixed speech into a plurality of speech segments, where the plurality of speech segments include target speech segments; and if the target speech segments correspond to a same object, determining the object as the target object, and determining the target speech segments as the reference speech of the target object. In the foregoing implementation, if the user does not specify the target object, the mixed speech may be first divided into a plurality of speech segments with a same length, to form a speech segment set. For a specific speech segment in the set, the speech segment may be referred to as a target speech segment. For the target speech segment, the target speech segment may be further divided into several speech sub-segments with a same length, and computation is performed on the several speech sub-segments, to determine whether the several speech sub-segments belong to a same object. If the several speech sub-segments belong to a same object, the object is determined as the target object, and the target speech segment is determined as the reference speech of the target object.

A second aspect of embodiments of this application provides a model training method. The method includes: obtaining a mixed speech and a reference speech of a target object, where the mixed speech includes a speech of the target object and a speech of another object other than the target object; processing the mixed speech, the reference speech, and an intermediate output of a second to-be-trained model by using a first to-be-trained model, to obtain an intermediate output of the first to-be-trained model and a final output of the first to-be-trained model, where the final output of the first to-be-trained model is used to obtain the speech of the target object; processing the mixed speech and the intermediate output of the first to-be-trained model by using the second to-be-trained model, to obtain the intermediate output of the second to-be-trained model and a final output of the second to-be-trained model, where the final output of the second to-be-trained model is used to determine a position of the speech of the target object in the mixed speech; and training the first to-be-trained model and the second to-be-trained model based on the final output of the first to-be-trained model and the final output of the second to-be-trained model, to obtain a first model and a second model.

A target model obtained through training in the foregoing method has speech processing functions (namely, a speaker diarization function and a target speaker speech extraction function). Specifically, after the mixed speech needs to be processed, the mixed speech and the reference speech of the target object may be first obtained, where the mixed speech includes the speech of the target object and the speech of another object other than the target object. Then, the mixed speech and the reference speech may be input into the target model. In this case, the first model in the target model may process the mixed speech, the reference speech, and the intermediate output of the second model, to obtain the intermediate output of the first model and the final output of the first model. In addition, the second model in the target model may process the mixed speech and the intermediate output of the first model, to obtain the intermediate output of the second model and the final output of the second model. Finally, the final output of the first model may be used to obtain the speech of the target object, and the final output of the second model may also be used to determine the position of the speech of the target object in the mixed speech. It can be learned from the foregoing process that, the first model and the second model are used as two branches in the target model; and in a process of separately processing the mixed speech, cross fusion of the intermediate outputs is implemented, to jointly complete two types of tasks: speaker diarization and target speaker speech extraction, for the mixed speech. It can be learned that a new model framework, namely, the target model, provided in this embodiment of this application can simultaneously support the two types of tasks: the speaker diarization and the target speaker speech extraction, thereby helping reduce design costs of speech processing.

In a possible implementation, processing the mixed speech, the reference speech, and the intermediate output of the second to-be-trained model, to obtain the intermediate output of the first to-be-trained model and the final output of the first to-be-trained model includes: performing first processing on the mixed speech and the reference speech, to obtain the intermediate output of the first to-be-trained model; and performing second processing on the intermediate output of the first to-be-trained model and the intermediate output of the second to-be-trained model, to obtain the final output of the first to-be-trained model.

In a possible implementation, processing the mixed speech and the intermediate output of the first to-be-trained model, to obtain the intermediate output of the second to-be-trained model and the final output of the second to-be-trained model includes: performing third processing on the mixed speech and the intermediate output of the first to-be-trained model, to obtain the intermediate output of the second to-be-trained model; and performing fourth processing on the intermediate output of the second to-be-trained model, to obtain the final output of the second to-be-trained model.

In a possible implementation, the first processing includes at least one of the following: encoding and processing based on a recurrent neural network, and the second processing includes at least one of the following: splicing, processing based on a recurrent neural network, mask prediction, and decoding.

In a possible implementation, the third processing includes at least one of the following: processing based on a bidirectional long short term memory network, and the fourth processing includes at least one of the following: splicing, processing based on a bidirectional long short term memory network, and linear computation.

In a possible implementation, the method further includes: performing upsampling on the intermediate output of the second to-be-trained model by using a third to-be-trained model, to obtain an upsampled intermediate output of the second to-be-trained model; and processing the mixed speech, the reference speech, and the intermediate output of the second to-be-trained model, to obtain the intermediate output of the first to-be-trained model and the final output of the first to-be-trained model includes: processing the mixed speech, the reference speech, and the upsampled intermediate output of the second to-be-trained model, to obtain the intermediate output of the first to-be-trained model and the final output of the first to-be-trained model.

In a possible implementation, the method further includes: performing downsampling on the intermediate output of the first to-be-trained model by using the third to-be-trained model, to obtain a downsampled intermediate output of the first to-be-trained model; and processing the mixed speech and the intermediate output of the first to-be-trained model, to obtain the intermediate output of the second to-be-trained model and the final output of the second to-be-trained model includes: processing the mixed speech and the downsampled intermediate output of the first to-be-trained model, to obtain the intermediate output of the second to-be-trained model and the final output of the second to-be-trained model.

In a possible implementation, obtaining the reference speech of the target object includes: obtaining information about the target object, where the information includes at least one of the following: an image of the target object, a text of the target object, and an identifier of the target object; and obtaining, in a preset speech library, the reference speech of the target object corresponding to the information.

In a possible implementation, obtaining the reference speech of the target object includes: dividing the mixed speech into a plurality of speech segments, where the plurality of speech segments include target speech segments; and if the target speech segments correspond to a same object, determining the object as the target object, and determining the target speech segments as the reference speech of the target object.

In a possible implementation, training the first to-be-trained model and the second to-be-trained model based on the final output of the first to-be-trained model and the final output of the second to-be-trained model, to obtain the first model and the second model includes: obtaining a target loss based on the final output of the first to-be-trained model, a real output of the first to-be-trained model, the final output of the second to-be-trained model, and a real output of the second to-be-trained model, where the target loss indicates a difference between the final output of the first to-be-trained model and the real output of the first to-be-trained model and a difference between the final output of the second to-be-trained model and the real output of the second to-be-trained model; and updating, based on the target loss, a parameter of the first to-be-trained model and a parameter of the second to-be-trained model until a model training condition is met, to obtain the first model and the second model.

In a possible implementation, the method further includes: updating the parameter of the first to-be-trained model based on the target loss until the model training condition is met, to obtain a third model.

A third aspect of embodiments of this application provides a speech processing apparatus. The apparatus includes: an obtaining module, configured to obtain a mixed speech and a reference speech of a target object, where the mixed speech includes a speech of the target object and a speech of another object other than the target object; a first processing module, configured to process the mixed speech, the reference speech, and an intermediate output of a second model by using a first model, to obtain an intermediate output of the first model and a final output of the first model, where the final output of the first model is used to obtain the speech of the target object; and a second processing module, configured to process the mixed speech and the intermediate output of the first model by using the second model, to obtain the intermediate output of the second model and a final output of the second model, where the final output of the second model is used to determine a position of the speech of the target object in the mixed speech.

**It** can be seen from the foregoing apparatus that, after the mixed speech needs to be processed, the mixed speech and the reference speech of the target object may be first obtained, where the mixed speech includes the speech of the target object and the speech of another object other than the target object. Then, the mixed speech and the reference speech may be input into the target model. In this case, the first model in the target model may process the mixed speech, the reference speech, and the intermediate output of the second model, to obtain the intermediate output of the first model and the final output of the first model. In addition, the second model in the target model may process the mixed speech and the intermediate output of the first model, to obtain the intermediate output of the second model and the final output of the second model. Finally, the final output of the first model may be used to obtain the speech of the target object, and the final output of the second model may also be used to determine the position of the speech of the target object in the mixed speech. It can be learned from the foregoing process that, the first model and the second model are used as two branches in the target model; and in a process of separately processing the mixed speech, cross fusion of the intermediate outputs is implemented, to jointly complete two types of tasks: speaker diarization and target speaker speech extraction, for the mixed speech. It can be learned that a new model framework, namely, the target model, provided in this embodiment of this application can simultaneously support the two types of tasks: the speaker diarization and the target speaker speech extraction, thereby helping reduce design costs of speech processing.

In a possible implementation, the first processing module is configured to: perform first processing on the mixed speech and the reference speech, to obtain the intermediate output of the first model; and perform second processing on the intermediate output of the first model and the intermediate output of the second model, to obtain the final output of the first model.

In a possible implementation, the second processing module is configured to: perform third processing on the mixed speech and the intermediate output of the first model, to obtain the intermediate output of the second model; and perform fourth processing on the intermediate output of the second model, to obtain the final output of the second model.

In a possible implementation, the first processing includes at least one of the following: encoding and processing based on a recurrent neural network, and the second processing includes at least one of the following: splicing, processing based on a recurrent neural network, mask prediction, and decoding.

In a possible implementation, the third processing includes at least one of the following: processing based on a bidirectional long short term memory network, and the fourth processing includes at least one of the following: splicing, processing based on a bidirectional long short term memory network, and linear computation.

In a possible implementation, the apparatus further includes: an upsampling module, configured to perform upsampling on the intermediate output of the second model by using a third model, to obtain an upsampled intermediate output of the second model, where the first processing module is configured to process the mixed speech, the reference speech, and the upsampled intermediate output of the second model, to obtain the intermediate output of the first model and the final output of the first model.

In a possible implementation, the apparatus further includes: a downsampling module, configured to perform downsampling on the intermediate output of the first model by using the third model, to obtain a downsampled intermediate output of the first model, where the second processing module is configured to process the mixed speech and the downsampled intermediate output of the first model, to obtain the intermediate output of the second model and the final output of the second model.

In a possible implementation, the obtaining module is configured to: obtain information about the target object, where the information includes at least one of the following: an image of the target object, a text of the target object, and an identifier of the target object; and obtain, in a preset speech library, the reference speech of the target object corresponding to the information.

In a possible implementation, the obtaining module is configured to: divide the mixed speech into a plurality of speech segments, where the plurality of speech segments include target speech segments; and if the target speech segments correspond to a same object, determine the object as the target object, and determine the target speech segments as the reference speech of the target object.

A fourth aspect of embodiments of this application provides a model training apparatus. The apparatus includes: an obtaining module, configured to obtain a mixed speech and a reference speech of a target object, where the mixed speech includes a speech of the target object and a speech of another object other than the target object; a first processing module, configured to process the mixed speech, the reference speech, and an intermediate output of a second to-be-trained model by using a first to-be-trained model, to obtain an intermediate output of the first to-be-trained model and a final output of the first to-be-trained model, where the final output of the first to-be-trained model is used to obtain the speech of the target object; a second processing module, configured to process the mixed speech and the intermediate output of the first to-be-trained model by using the second to-be-trained model, to obtain the intermediate output of the second to-be-trained model and a final output of the second to-be-trained model, where the final output of the second to-be-trained model is used to determine a position of the speech of the target object in the mixed speech; and a training module, configured to train the first to-be-trained model and the second to-be-trained model based on the final output of the first to-be-trained model and the final output of the second to-be-trained model, to obtain a first model and a second model.

A target model obtained through training in the foregoing apparatus has speech processing functions (namely, a speaker diarization function and a target speaker speech extraction function). Specifically, after the mixed speech needs to be processed, the mixed speech and the reference speech of the target object may be first obtained, where the mixed speech includes the speech of the target object and the speech of another object other than the target object. Then, the mixed speech and the reference speech may be input into the target model. In this case, the first model in the target model may process the mixed speech, the reference speech, and the intermediate output of the second model, to obtain the intermediate output of the first model and the final output of the first model. In addition, the second model in the target model may process the mixed speech and the intermediate output of the first model, to obtain the intermediate output of the second model and the final output of the second model. Finally, the final output of the first model may be used to obtain the speech of the target object, and the final output of the second model may also be used to determine the position of the speech of the target object in the mixed speech. It can be learned from the foregoing process that, the first model and the second model are used as two branches in the target model; and in a process of separately processing the mixed speech, cross fusion of the intermediate outputs is implemented, to jointly complete two types of tasks: speaker diarization and target speaker speech extraction, for the mixed speech. It can be learned that a new model framework, namely, the target model, provided in this embodiment of this application can simultaneously support the two types of tasks: the speaker diarization and the target speaker speech extraction, thereby helping reduce design costs of speech processing.

In a possible implementation, the first processing module is configured to: perform first processing on the mixed speech and the reference speech, to obtain the intermediate output of the first to-be-trained model; and perform second processing on the intermediate output of the first to-be-trained model and the intermediate output of the second to-be-trained model, to obtain the final output of the first to-be-trained model.

In a possible implementation, the second processing module is configured to: perform third processing on the mixed speech and the intermediate output of the first to-be-trained model, to obtain the intermediate output of the second to-be-trained model; and perform fourth processing on the intermediate output of the second to-be-trained model, to obtain the final output of the second to-be-trained model.

In a possible implementation, the first processing includes at least one of the following: encoding and processing based on a recurrent neural network, and the second processing includes at least one of the following: splicing, processing based on a recurrent neural network, mask prediction, and decoding.

In a possible implementation, the third processing includes at least one of the following: processing based on a bidirectional long short term memory network, and the fourth processing includes at least one of the following: splicing, processing based on a bidirectional long short term memory network, and linear computation.

In a possible implementation, the apparatus further includes: an upsampling module, configured to perform upsampling on the intermediate output of the second to-be-trained model by using a third to-be-trained model, to obtain an upsampled intermediate output of the second to-be-trained model, where the first processing module is configured to process the mixed speech, the reference speech, and the upsampled intermediate output of the second to-be-trained model, to obtain the intermediate output of the first to-be-trained model and the final output of the first to-be-trained model.

In a possible implementation, the apparatus further includes: a downsampling module, configured to perform downsampling on the intermediate output of the first to-be-trained model by using the third to-be-trained model, to obtain a downsampled intermediate output of the first to-be-trained model, where the second processing module is configured to process the mixed speech and the downsampled intermediate output of the first to-be-trained model, to obtain the intermediate output of the second to-be-trained model and the final output of the second to-be-trained model.

In a possible implementation, the obtaining module is configured to: obtain information about the target object, where the information includes at least one of the following: an image of the target object, a text of the target object, and an identifier of the target object; and obtain, in a preset speech library, the reference speech of the target object corresponding to the information.

In a possible implementation, the obtaining module is configured to: divide the mixed speech into a plurality of speech segments, where the plurality of speech segments include target speech segments; and if the target speech segments correspond to a same object, determine the object as the target object, and determine the target speech segments as the reference speech of the target object.

In a possible implementation, the training module is configured to: obtain a target loss based on the final output of the first to-be-trained model (namely, a first prediction processing result of the foregoing mixed speech), a real output of the first to-be-trained model (namely, a first real processing result of the foregoing mixed speech), the final output of the second to-be-trained model (namely, a second prediction processing result of the foregoing mixed speech), and a real output of the second to-be-trained model (namely, a second real processing result of the foregoing mixed speech), where the target loss indicates a difference between the final output of the first to-be-trained model and the real output of the first to-be-trained model and a difference between the final output of the second to-be-trained model and the real output of the second to-be-trained model; and update, based on the target loss, a parameter of the first to-be-trained model and a parameter of the second to-be-trained model until a model training condition is met, to obtain the first model and the second model.

In a possible implementation, the training module is further configured to update the parameter of the first to-be-trained model based on the target loss until the model training condition is met, to obtain a third model.

A fifth aspect of embodiments of this application provides a speech processing apparatus. The apparatus includes a memory and a processor. The memory stores code, and the processor is configured to execute the code. When the code is executed, the speech processing apparatus performs the method according to any one of the first aspect or the possible implementations of the first aspect.

A sixth aspect of embodiments of this application provides a model training apparatus. The apparatus includes a memory and a processor. The memory stores code, and the processor is configured to execute the code. When the code is executed, the model training apparatus performs the method according to any one of the second aspect or the possible implementations of the second aspect.

A seventh aspect of embodiments of this application provides a circuit system. The circuit system includes a processing circuit. The processing circuit is configured to perform the method according to any one of the first aspect, the possible implementations of the first aspect, the second aspect, or the possible implementations of the second aspect.

An eighth aspect of embodiments of this application provides a chip system. The chip system includes a processor, configured to invoke a computer program or computer instructions stored in a memory, so that the processor performs the method according to any one of the first aspect, the possible implementations of the first aspect, the second aspect, or the possible implementations of the second aspect.

In a possible implementation, the processor is coupled to the memory through an interface.

In a possible implementation, the chip system further includes a memory. The memory stores a computer program or computer instructions.

A ninth aspect of embodiments of this application provides a computer storage medium. The computer storage medium stores a computer program. When the program is executed by a computer, the computer is enabled to perform the method according to any one of the first aspect, the possible implementations of the first aspect, the second aspect, or the possible implementations of the second aspect.

A tenth aspect of embodiments of this application provides a computer program product. The computer program product stores instructions. When the instructions are executed by a computer, the computer is enabled to perform the method according to any one of the first aspect, the possible implementations of the first aspect, the second aspect, or the possible implementations of the second aspect.

In embodiments of this application, after the mixed speech needs to be processed, the mixed speech and the reference speech of the target object may be first obtained, where the mixed speech includes the speech of the target object and the speech of another object other than the target object. Then, the mixed speech and the reference speech may be input into the target model. In this case, the first model in the target model may process the mixed speech, the reference speech, and the intermediate output of the second model, to obtain the intermediate output of the first model and the final output of the first model. In addition, the second model in the target model may process the mixed speech and the intermediate output of the first model, to obtain the intermediate output of the second model and the final output of the second model. Finally, the final output of the first model may be used to obtain the speech of the target object, and the final output of the second model may also be used to determine the position of the speech of the target object in the mixed speech. It can be learned from the foregoing process that, the first model and the second model are used as two branches in the target model; and in the process of separately processing the mixed speech, cross fusion of the intermediate outputs is implemented, to jointly complete the two types of tasks: the speaker diarization and the target speaker speech extraction, for the mixed speech. It can be learned that the new model framework, namely, the target model, provided in embodiments of this application can simultaneously support the two types of tasks: the speaker diarization and the target speaker speech extraction, thereby helping reduce design costs of speech processing.

## BRIEF DESCRIPTION OF DRAWINGS

FIG. 1 is a diagram of a structure of an artificial intelligence main framework;
FIG. 2a is a diagram of a structure of a speech processing system according to an embodiment of this application;
FIG. 2b is a diagram of another structure of a speech processing system according to an embodiment of this application;
FIG. 2c is a diagram of a speech processing related device according to an embodiment of this application;
FIG. 3 is a diagram of an architecture of a system 100 according to an embodiment of this application;
FIG. 4 is a diagram of a structure of a target model according to an embodiment of this application;
FIG. 5 is a schematic flowchart of a speech processing method according to an embodiment of this application;
FIG. 6 is a diagram of another structure of a target model according to an embodiment of this application;
FIG. 7 is a diagram of another structure of a target model according to an embodiment of this application;
FIG. 8 is a schematic flowchart of a model training method according to an embodiment of this application;
FIG. 9 is a diagram of a structure of a speech processing apparatus according to an embodiment of this application;
FIG. 10 is a diagram of a structure of a model training apparatus according to an embodiment of this application;
FIG. 11 is a diagram of a structure of an execution device according to an embodiment of this application;
FIG. 12 is a diagram of a structure of a training device according to an embodiment of this application; and
FIG. 13 is a diagram of a structure of a chip according to an embodiment of this application.

## DESCRIPTION OF EMBODIMENTS

Embodiments of this application provide a speech processing method and a related device thereof, so that two types of tasks: speaker diarization and target speaker speech extraction, can be simultaneously supported, thereby helping reduce design costs of speech processing.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a distinguishing manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

It is a common scenario in which a plurality of speakers in a same space speak separately or simultaneously to generate a mixed speech. For example, in a speech conference, different speakers speak at different time or simultaneously. Tasks such as content understanding of the mixed speech and speech separation of different speakers have always been very challenging problems in the speech field. These problems are resolved by using a neural network model in an AI technology.

For example, a speaker diarization (speaker diarization) task mainly resolves a problem of "who speak when". For example, in a speech conference, a specific speaker speaking at specific time in the conference needs to be determined, to generate meeting minutes. In this task, after the mixed speech is processed by using the neural network model, a position of a speech of each speaker in the mixed speech, namely, a timestamp corresponding to the speech of each speaker, may be obtained.

For another example, a target speaker speech extraction (target speaker extraction) task mainly resolves a problem of how to extract a speech of a target speaker. For example, in a speech conference, a speech of a specific speaker needs to be extracted, to recognize content spoken by the speaker. In this task, after the mixed speech is processed by using the neural network model, the speech of the target speaker may be extracted from the mixed speech.

For the foregoing two tasks, specific neural network models are designed for different tasks in a related technology. Consequently, design costs of speech processing are high.

To resolve the foregoing problem, embodiments of this application provides an image processing method. The method may be implemented with reference to an artificial intelligence (artificial intelligence, AI) technology. The AI technology is a technical discipline that simulates, extends, and expands human intelligence by using a digital computer or a machine controlled by a digital computer. The AI technology obtains an optimal result by perceiving an environment, obtaining knowledge, and using the knowledge. In other words, the artificial intelligence technology is a branch of computer science, and attempts to understand essence of intelligence and produce a new intelligent machine that can react in a similar manner to human intelligence. Using artificial intelligence to process data is a common application manner of artificial intelligence.

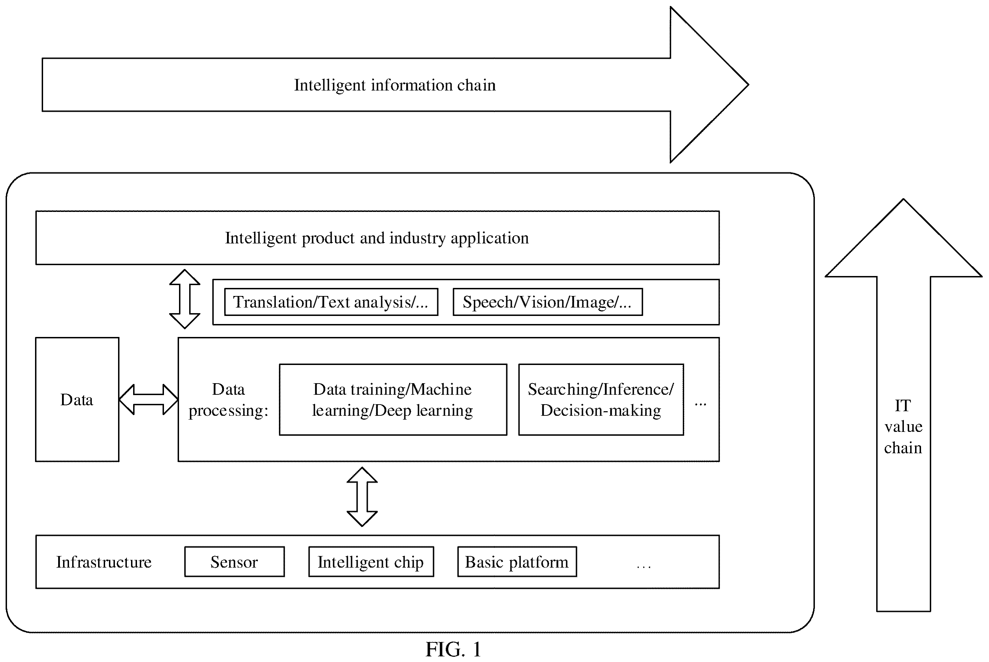

An overall working procedure of an artificial intelligence system is first described. FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip (a hardware acceleration chip such as a CPU, an NPU, a GPU, an ASIC, or an FPGA). The basic platform includes related platforms such as a distributed computing framework and a network for assurance and support. The basic platform may include cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, a speech, and a text, further relates to internet of things data of a conventional device, and includes service data of an existing system and perception data such as force, displacement, liquid level, temperature, and humidity.

(3) Data processing

Data processing usually includes manners such as data training, machine learning, deep learning, searching, inference, decision-making, and the like.

Machine learning and deep learning may mean performing symbolic and formal intelligent information modeling, extraction, preprocessing, training, and the like on data.

Inference is a process in which a human intelligent inference manner is simulated in a computer or an intelligent system, and machine thinking and problem resolving are performed by using formal information according to an inference control policy. A typical function is searching and matching.

Decision-making is a process of making a decision after intelligent information is inferred, and usually provides functions such as classification, ranking, and prediction.

(4) General capability

After data processing mentioned above is performed on the data, some general capabilities may be further formed based on a data processing result. For example, the general capability may be an algorithm or a general system, for example, translation, text analysis, computer vision processing, speech recognition, and image recognition.

(5) Intelligent product and industry application

Intelligent products and industry applications are products and applications of artificial intelligence systems in various fields, and are encapsulation for an overall artificial intelligence solution, to productize intelligent information decision-making and implement applications. Application fields thereof mainly include an intelligent terminal, intelligent transportation, intelligent healthcare, autonomous driving, a smart city, and the like.

The following describes several application scenarios of this application.

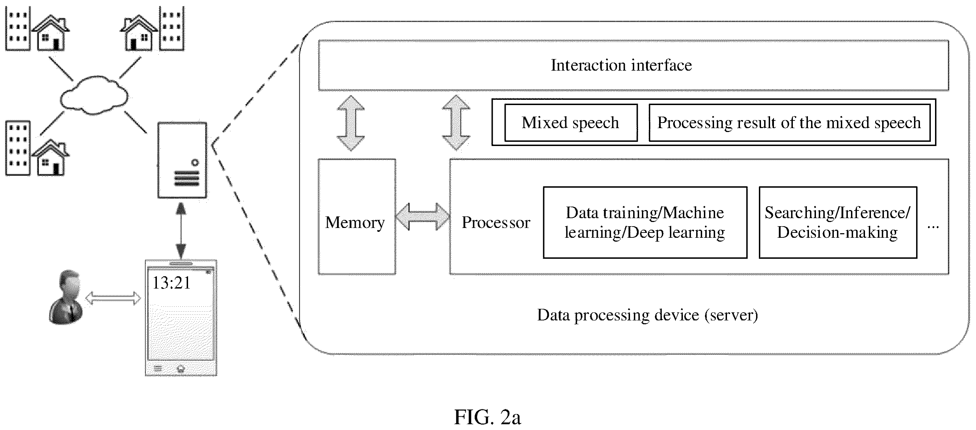

FIG. 2a is a diagram of a structure of a speech processing system according to an embodiment of this application. The speech processing system includes user equipment and a data processing device. The user equipment includes an intelligent terminal such as a mobile phone, a personal computer, or an information processing center. The user equipment is a speech processing initiator, and is used as a speech processing request initiator. Usually, a user initiates a request through the user equipment.

The data processing device may be a device or a server that has a data processing function, for example, a cloud server, a network server, an application server, and a management server. The data processing device receives a text processing request from the intelligent terminal through an interaction interface, and then performs text processing in manners such as machine learning, deep learning, searching, inference, and decision-making through a data storage memory and a data processing processor. The memory in the data processing device may be an umbrella term, and includes a local storage and a database storing historical data. The database may be in the data processing device, or may be in another network server.

In the speech processing system shown in FIG. 2a, the user equipment may receive an instruction from the user. For example, the user equipment may obtain a speech input/selected by the user, and then initiate a request to the data processing device, so that the data processing device executes a speech processing application for the image obtained by the user equipment, to obtain a corresponding processing result for the speech. For example, the user equipment may obtain a mixed speech input by the user, and then initiate a processing request of the mixed speech to the data processing device, so that the data processing device performs a series of processing (for example, speaker diarization and target speaker speech extraction) on the mixed image, to obtain a processing result of the mixed speech. The processing result of the mixed speech may be used to obtain a speech of a target speaker, and determine a position of the speech of the target speaker in the mixed speech.

In FIG. 2a, the data processing device may perform the speech processing method in this embodiment of this application.

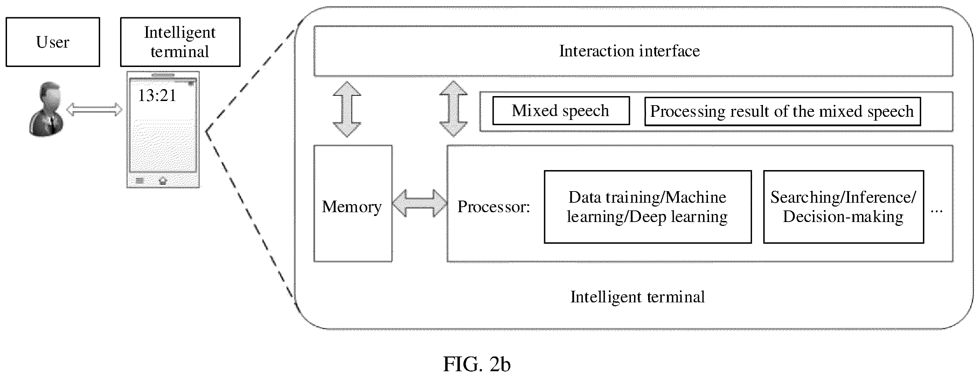

FIG. 2b is a diagram of another structure of a speech processing system according to an embodiment of this application. In FIG. 2b, user equipment is directly used as a data processing device. The user equipment can directly obtain an input from a user and directly process the input by hardware of the user equipment. A specific process is similar to that in FIG. 2a. For details, refer to the foregoing descriptions. Details are not described herein again.

In the speech processing system shown in FIG. 2b, the user equipment may receive an instruction from the user. For example, the user equipment may obtain a mixed speech input by the user, and then perform a series of processing (for example, speaker diarization and target speaker speech extraction) on the mixed image, to obtain a processing result of the mixed speech. The processing result of the mixed speech may be used to obtain a speech of a target speaker and determine a position of the speech of the target speaker in the mixed speech.

In FIG. 2b, the user equipment may perform the speech processing method in this embodiment of this application.

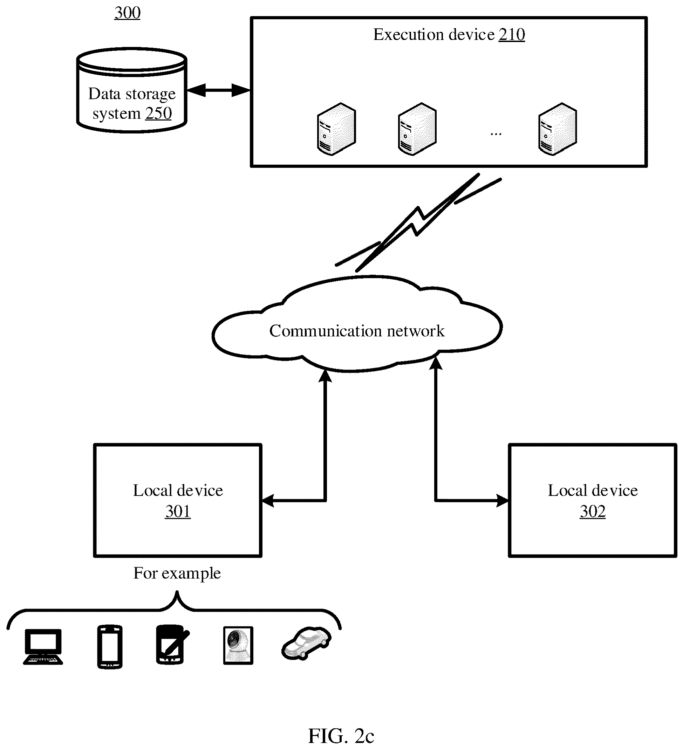

FIG. 2c is a diagram of a speech processing related device according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processor in FIG. 2a and FIG. 2b may perform data training/machine learning/deep learning by using a neural network model or another model (for example, a model based on a support vector machine), and execute a speech processing application for an image by using a model obtained through final data training or learning, to obtain a corresponding processing result.

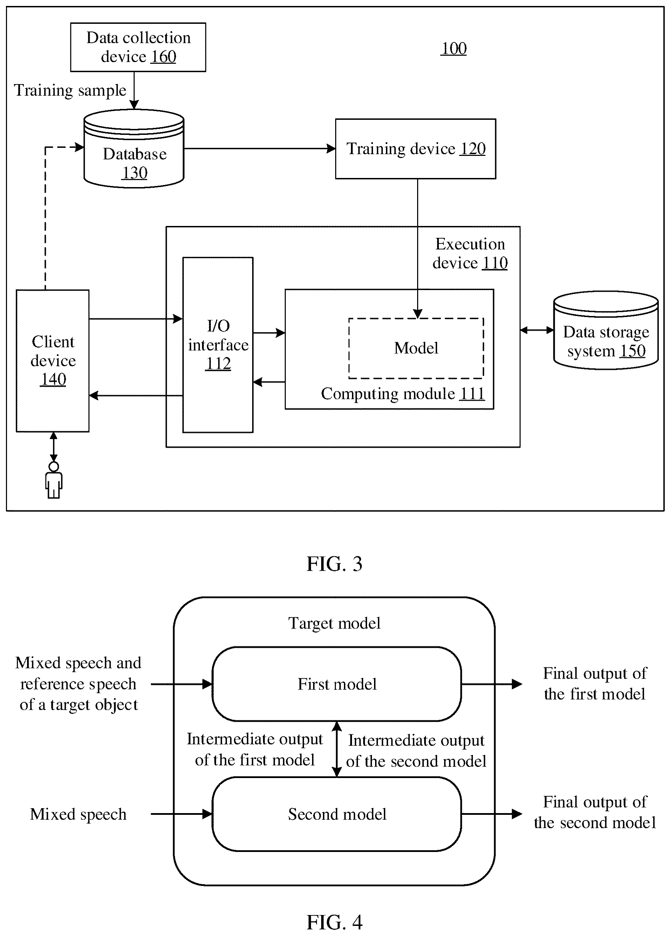

FIG. 3 is a diagram of an architecture of a system 100 according to an embodiment of this application. In FIG. 3, an execution device 110 is configured with an input/output (input/output, I/O) interface 112, to exchange data with an external device, and a user may input data into the I/O interface 112 through a client device 140. The input data in this embodiment of this application may include each to-be-scheduled task, a resource that can be invoked, and another parameter.

In a process in which the execution device 110 preprocesses the input data, or in a process in which a computing module 111 of the execution device 110 performs related processing such as computing (for example, performs function implementation of a neural network in this application), the execution device 110 may invoke data, code, and the like in a data storage system 150 for corresponding processing, and may further store, in the data storage system 150, data, an instruction, and the like that are obtained through corresponding processing.

Finally, the I/O interface 112 returns a processing result to the client device 140, to provide the processing result for the user.

It should be noted that, for different objectives or different tasks, a training device 120 may generate corresponding target models/rules based on different training data. The corresponding target models/rules may be used to achieve the foregoing objectives or complete the foregoing tasks, to provide a required result for the user. The training data may be stored in a database 130, and is a training sample collected by a data collection device 160.

In a case shown in FIG. 3, the user may manually provide input data and the user may manually provide the input data in an interface provided by the I/O interface 112. In another case, the client device 140 may automatically send the input data to the I/O interface 112. If the client device 140 needs to obtain authorization from the user to automatically send the input data, the user may set corresponding permission on the client device 140. The user may view, on the client device 140, a result output by the execution device 110. The result may be specifically presented in a specific manner of displaying, a sound, an action, or the like. The client device 140 may alternatively be used as a data collection end, to collect, as new sample data, input data input to the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in the figure.

It should be noted that FIG. 3 is merely a diagram of an architecture of a system according to an embodiment of this application. A position relationship between the devices, the components, the modules, and the like shown in the figure does not constitute any limitation. For example, in FIG. 3, the data storage system 150 is an external memory relative to the execution device 110, but in another case, the data storage system 150 may alternatively be disposed in the execution device 110. As shown in FIG. 3, a neural network may be obtained through training based on the training device 120.

An embodiment of this application further provides a chip. The chip includes a neural network processing unit NPU. The chip may be disposed in the execution device 110 shown in FIG. 3, to complete computing work of the computing module 111. The chip may alternatively be disposed in the training device 120 shown in FIG. 3, to complete training work of the training device 120 and output a target model/rule.

The neural network processing unit NPU is mounted to a host central processing unit (central processing unit, CPU) (host CPU) as a coprocessor. The host CPU assigns a task. A core part of the NPU is an operation circuit, and a controller controls the operation circuit to extract data in a memory (a weight memory or an input memory) and perform an operation.

In some implementations, the operation circuit includes a plurality of process engines (process engines, PE) inside. In some implementations, the operation circuit is a two-dimensional systolic array. The operation circuit may alternatively be a one-dimensional systolic array or another electronic circuit capable of performing mathematical operations such as multiplication and addition. In some implementations, the operation circuit is a general-purpose matrix processor.

For example, assuming that there is an input matrix A, a weight matrix B, and an output matrix C, the operation circuit fetches, from a weight memory, data corresponding to the matrix B, and buffers the data on each PE in the operation circuit; and the operation circuit fetches data of the matrix A from an input memory, to perform a matrix operation on the matrix B, and stores an obtained partial result or an obtained final result of the matrix in an accumulator (accumulator).

A vector computing unit may perform further processing such as vector multiplication, vector addition, an exponent operation, a logarithm operation, or value comparison on an output of the operation circuit. For example, the vector computing unit may be configured to perform network computing, for example, pooling (pooling), batch normalization (batch normalization), or local response normalization (local response normalization) at a non-convolutional/non-FC layer in a neural network.

In some implementations, the vector computing unit can store a processed output vector in a unified buffer. For example, the vector computing unit may apply a nonlinear function to an output, for example, a vector of an accumulated value, of the operation circuit to generate an activation value. In some implementations, the vector computing unit generates a normalized value, a combined value, or both a normalized value and a combined value. In some implementations, the processed output vector can be used as an activated input to the operation circuit, for example, the processed output vector can be used at a subsequent layer in the neural network.

A unified memory is configured to store input data and output data.

For weight data, a direct memory access controller (direct memory access controller, DMAC) directly transfers input data in the external memory to the input memory and/or the unified memory, stores, in the weight memory, weight data in the external memory, and stores, in the external memory, data in the unified memory.

A bus interface unit (bus interface unit, BIU) is configured to implement interaction between the host CPU, the DMAC, and an instruction fetch buffer through a bus.

The instruction fetch buffer (instruction fetch buffer) connected to the controller is configured to store instructions used by the controller.

The controller is configured to invoke the instructions buffered in the instruction fetch buffer, to control a working process of an operation accelerator.

Usually, the unified memory, the input memory, the weight memory, and the instruction fetch buffer each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes terms and concepts related to the neural network in embodiments of this application.

(1) Neural network

The neural network may include a neuron. The neuron may be an operation unit that uses xs and an intercept of 1 as an input. An output of the operation unit may be as follows:

$$h_{W,b}(x) = f(W^T x) = f(\sum\nolimits_{s=1}^{n} W_s x_s + b) \qquad (1)$$

s=1, 2, ..., n, n is a natural number greater than 1, Ws is a weight of xs, and b is bias of the neuron. f is an activation function (activation function) of the neuron, and is used to introduce a nonlinear feature into the neural network to convert an input signal in the neuron into an output signal. The output signal of the activation function may be used as an input of a next convolution layer. The activation function may be a sigmoid function. The neural network is a network formed by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

Work at each layer of the neural network may be described by using a mathematical expression $y = a(Wx + b)$. From a physical layer, work at each layer in the neural network may be understood as completing transformation from an input space to an output space (that is, from a row space to a column space of a matrix) by performing five operations on the input space (a set of input vectors). The five operations include: 1. dimension increasing/dimension reduction; 2. scaling up/scaling down; 3. rotation; 4. translation; and 5. "bending". The operations 1, 2, and 3 are completed by $Wx$, the operation 4 is completed by $+b$, and the operation 5 is implemented by $a()$. The word "space" is used herein for expression because a classified object is not a single thing, but a type of things. A space is a set of all individuals of this type of things. $W$ is a weight vector, and each value in the vector indicates a weight value of one neuron at this layer in the neural network. The vector W determines space transformation from the input space to the output space described above. In other words, a weight $W$ at each layer controls how to perform space transformation. A purpose of training the neural network is to finally obtain a weight matrix (a weight matrix formed by vectors $W$ at a plurality of layers) at all layers in the trained neural network. Therefore, a training process of the neural network is essentially a manner of learning control of space transformation, and more specifically, learning a weight matrix.

Because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the neural network). For example, if the predicted value of the network is large, the weight vector is adjusted to lower the predicted value until the neural network can predict the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A larger output value (loss) of the loss function indicates a larger difference. Therefore, training of the neural network is a process of minimizing the loss as much as possible.

(2) Back propagation algorithm

In a training process, a neural network may correct values of a parameter in an initial neural network model by using an error back propagation (back propagation, BP) algorithm, so that a reconstruction error loss of the neural network model becomes increasingly smaller. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter, for example, a weight matrix, of an optimal neural network model.

The following describes the method provided in this application from a neural network training side and a neural network application side.

A model training method provided in embodiments of this application relates to data sequence processing, and may be specifically applied to methods such as data training, machine learning, and deep learning, to perform symbolic and formal intelligent information modeling, extraction, preprocessing, training, and the like on training data (for example, a mixed speech and a reference speech of a target object in the model training method provided in embodiments of this application), and finally obtain a trained neural network (for example, a first model, a second model, and a third model in the model training method provided in embodiments of this application). In addition, in a speech processing method provided in embodiments of this application, input data (for example, a mixed speech and a reference speech of a target object in the speech processing method provided in embodiments of this application) may be input into the trained neural network by using the trained neural network, to obtain output data (for example, a final output of a first model and a final output of a second model in the speech processing method provided in embodiments of this application). It should be noted that the model training method and the speech processing method provided in embodiments of this application are invented based on a same concept, and may also be understood as two parts of a system, or two stages of an overall procedure, for example, a model training stage and a model application stage.

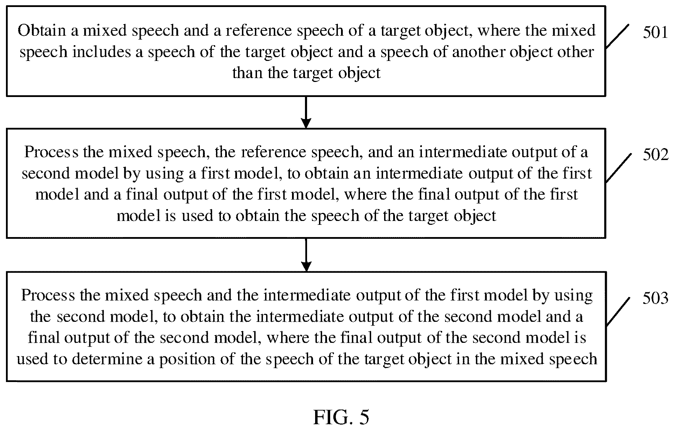

The speech processing method provided in embodiments of this application may be implemented by using a target model. FIG. 4 is a diagram of a structure of a target model according to an embodiment of this application. As shown in FIG. 4, the target model includes a first model and a second model, a first input end of the first model and a first input end of the second model are used as input ends of the entire target model, and a first output end of the first model and a first output end of the second model are used as output ends of the entire target model. Inside the target model, a second input end of the first model is connected to a second output end of the second model, and a second input end of the second model is connected to a second output end of the first model. To understand a working procedure of the target model, the following describes the working procedure of the target model with reference to FIG. 5. FIG. 5 is a schematic flowchart of a speech processing method according to an embodiment of this application. As shown in FIG. 5, the method includes the following steps.

501: Obtain a mixed speech and a reference speech of a target object, where the mixed speech includes a speech of the target object and a speech of another object other than the target object.

In this embodiment, when a user needs to perform speaker diarization and target speaker speech extraction on the mixed speech, the user may first obtain the to-be-processed mixed speech input by the user, where the mixed speech includes the speech of the target object (which may also be referred to as a target speaker) and the speech of another object (which may also be referred to as another speaker) other than the target object, in other words, the mixed speech is a speech obtained by mixing the speech corresponding to the target and the speech of another object.

After the mixed speech is obtained, the reference speech of the target object may be further obtained. Therefore, the mixed speech may be processed by using the reference speech corresponding to the target. It should be noted that the speech, of the target object, included in the mixed speech may also be understood as a real-time speech of the target object. Similarly, the speech of another object may also be understood as a real-time speech of the another object.

Specifically, the reference speech of the target object may be obtained in the following plurality of manners:

(1) If the user specifies the target object, information, about the target object, input by the user may be obtained. The information about the target object includes at least one of the following: a specific segment of speech of the target object (where the segment of speech and the speech, of the target object, included in the mixed speech are different speeches), an image of the target object (for example, a portrait of the target object), a text of the target object (for example, some words and articles that describe the target object), and an identifier of the target object (for example, an identity (identity document, ID) of the target object).

If the information about the target object is the specific segment of speech of the target object, the segment of speech may be directly used as the reference speech of the target object.

If the information about the target object is the image of the target object, the text of the target object, and the identifier of the target object, a preset speech library may be opened, and the speech library not only includes information about a plurality of objects, but also includes speeches registered by the plurality of objects in the speech library. It can be seen that the information about the plurality of objects and the plurality of registered speeches are in a one-to-one correspondence. Then, the speech library is traversed by using the information about the target object as an index, to find a speech corresponding to the information about the target object, and the speech is used as the reference speech of the target object.

(2) If the user does not specify the target object, the mixed speech may be first divided into a plurality of speech segments with a same length, to form a speech segment set. For a specific speech segment in the set, the speech segment may be referred to as a target speech segment. For the target speech segment, the target speech segment may be further divided into several speech sub-segments with a same length, and computing is performed on the several speech sub-segments by using a speaker verification (speaker verification) algorithm, to determine whether the several speech sub-segments belong to a same object. If the several speech sub-segments belong to a same object, the object is determined as the target object, and the target speech segment is determined as the reference speech of the target object.

For example, for the mixed speech, the mixed speech may be divided into sub-blocks A1, A2, A3, ..., AM with a length of L based on a time sequence relationship, and these sub-blocks with the length of L form a set A. For the sub-block A1, A1 may be further divided into three equal parts: first, middle, and last, namely, A11, A12, and A13. Then, a speaker verification model (speaker verification model) may be used to compute whether {A11, A12, A13} belong to a same speaker. If {A11, A12, A13} belong to a same speaker, the speaker may be determined as the target speaker, and A1 is determined as the reference speech of the target speaker.

It should be understood that, in this embodiment, there may be one or more other objects, and a quantity of other objects is not limited herein.

It should be further understood that, in this embodiment, the information directly used as the index may be the image, the text, and the identifier of the target object. Certainly, the information directly used as the index may be only the identifier of the target object. In this case, if the information, about the target object, input by the user is the image and the text of the target object, the image and the text of the target object may be first converted into the identifier of the target object, and then the identifier of the target object is used to index the reference speech of the target object.

502: Process the mixed speech, the reference speech, and an intermediate output of the second model by using the first model, to obtain an intermediate output of the first model and a final output of the first model, where the final output of the first model is used to obtain the speech of the target object.

503: Process the mixed speech and the intermediate output of the first model by using the second model, to obtain the intermediate output of the second model and a final output of the second model, where the final output of the second model is used to determine a position of the speech of the target object in the mixed speech.

After the mixed speech and the reference speech of the target object are obtained, the mixed speech and the reference speech of the target object may be input into the target model. In this case, the first model in the target model processes the mixed speech, the reference speech, and the intermediate output of the second model, to obtain the intermediate output of the first model and the final output of the first model. In addition, the second model in the target model may process the mixed speech and the intermediate output of the first model, to obtain the intermediate output of the second model and the final output of the second model. It should be noted that the final output of the first model may also be referred to as a first processing result of the mixed speech, and the speech, of the target object, included in the mixed speech may be obtained by using the first processing result of the mixed speech; and the final output of the second model may also be referred to as a second processing result of the mixed speech, and the position of the speech of the target object in the mixed speech, namely, a timestamp corresponding to the speech of the target object in the mixed speech, may be determined by using the second processing result of the mixed speech. Therefore, the speaker diarization and the target speaker speech extraction for the mixed speech are completed.

Specifically, the first model and the second model may obtain the intermediate output and the final output in the following manner:

After obtaining the mixed speech and the reference speech of the target object, the first model may first perform first processing on the mixed speech and the reference speech of the target object, to obtain the intermediate output of the first model, and send the intermediate output of the first model to the second model. Then, the first model may further receive the intermediate output of the second model, and perform second processing on the intermediate output of the first model and the intermediate output of the second model, to obtain the final output of the first model.

After obtaining the mixed speech and the intermediate output of the first model, the second model may first perform third processing on the mixed speech and the intermediate output of the first model, to obtain the intermediate output of the second model, and send the intermediate output of the second model to the first model. Then, the second model may perform fourth processing on the intermediate output of the second model, to obtain the final output of the second model.

More specifically, the first model and the second model may alternatively obtain the intermediate output and the final output in the following manner:

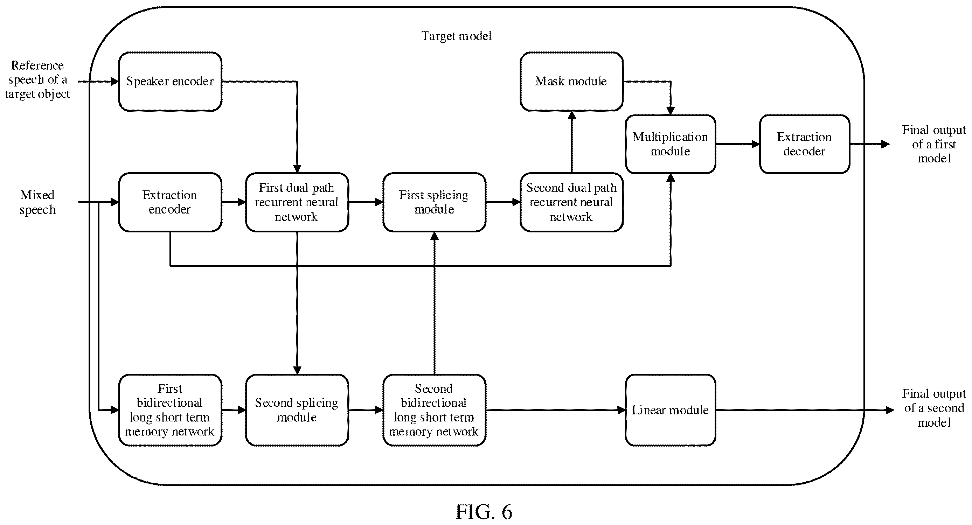

As shown in FIG. 6 (FIG. 6 is a diagram of another structure of the target model according to an embodiment of this application), the first model in the target model includes a speaker encoder (speaker encoder), an extraction encoder (extraction encoder), a first dual path recurrent neural network (dual path recurrent neural network, DPRNN), a first splicing module, a second dual path recurrent neural network, a mask module, a multiplication module, and an extraction decoder (extraction decoder). The second model in the target model includes a first bidirectional long short term memory (bi long short term memory) network, a second splicing module, a second bidirectional long short term memory network, and a linear (linear) module.

After obtaining the mixed speech, the extraction encoder may encode the mixed speech, to obtain a first feature of the mixed speech, and send the first feature to the first dual path recurrent neural network. After obtaining the reference speech of the target object, the speaker encoder may encode the reference speech of the target object, to obtain a feature of the reference speech of the target object, and send the feature of the reference speech of the target object to the first dual path recurrent neural network. After receiving the first feature of the mixed speech and the feature of the reference speech, the first dual path recurrent neural network may perform a series of processing (for example, feature extraction) on the first feature of the mixed speech and the feature of the reference speech, to obtain a second feature of the mixed speech (namely, the intermediate output of the first model), and send the second feature of the mixed speech to the first splicing module and the second splicing module. It should be noted that the first splicing module may also receive a seventh feature of the mixed speech from the second bidirectional long short term memory network. After obtaining the second feature of the mixed speech and the seventh feature of the mixed speech, the first splicing module may splice the second feature of the mixed speech and the seventh feature of the mixed speech, to obtain a third feature of the mixed speech, and send the third feature of the mixed speech to the second dual path recurrent neural network. After obtaining the third feature of the mixed speech, the second dual path recurrent neural network may perform a series of processing on the third feature of the mixed speech, to obtain a fourth feature of the mixed speech, and send the fourth feature of the mixed speech to the mask module. After obtaining the fourth feature of the mixed speech, the mask module may predict a time domain mask of the mixed speech based on the fourth feature of the mixed speech, and send the time domain mask to the multiplication module. After obtaining the time domain mask, the multiplication module may multiply the first feature of the mixed speech by the time domain mask, to remove a feature of the speech of another object from the first feature of the mixed speech to obtain a feature of the speech of the target object, and send the feature of the speech of the target object to the extraction decoder. After obtaining the feature of the speech of the target object, the extraction decoder may decode the feature of the speech of the target object, to obtain the speech of the target object, namely, the final output of the first model.

After obtaining the mixed speech, the first bidirectional long short term memory network may perform a series of processing (for example, feature extraction) on the mixed speech, to obtain a fifth feature of the mixed speech, and send the fifth feature of the mixed speech to the second splicing module. It should be noted that the second splicing module may also receive the second feature of the mixed speech from the first dual path recurrent neural network. After obtaining the second feature of the mixed speech and the fifth feature of the mixed speech, the second splicing module may splice the second feature of the mixed speech and the fifth feature of the mixed speech to obtain a sixth feature of the mixed speech, and send the sixth feature of the mixed speech to the second bidirectional long short term memory network. After obtaining the sixth feature of the mixed speech, the second bidirectional long short term memory network may perform a series of processing on the sixth feature of the mixed speech, to obtain the seventh feature of the mixed speech, and send the seventh feature of the mixed speech to the first splicing module and the linear module. After obtaining the seventh feature of the mixed speech, the linear module may perform a linear operation on the seventh feature of the mixed speech, to obtain probabilities that speech frames in the mixed speech belong to the target object, namely, the final output of the second model.

It can be seen that the first model finally outputs the speech of the target object, and the second module finally outputs the probabilities that the speech frames in the mixed speech belong to the target object. Based on these probabilities, several speech frames (where the several speech frames are the speech of the target object) that belong to the target object may be determined. Because each speech frame corresponds to one timestamp in the mixed speech (because all speech frames are sorted based on time, the mixed speech is formed), timestamps corresponding to the several speech frames in the mixed speech, namely, the timestamp corresponding to the speech of the target object in the mixed speech (which may also be referred to as the position of the speech of the target object in the mixed speech), may be obtained. For example, assuming that in the mixed speech, a 1st speech frame corresponds to a 1st moment, a 2nd speech frame corresponds to a 2nd moment, ..., and a 1000th speech frame corresponds to a 1000th moment, where all the 1st speech frame to a 200th speech frame belong to the target object, the timestamp corresponding to the speech of the target object in the mixed speech is a time period between the 1st moment and a 200th moment.

More specifically, if a frame sampling rate of the first model for the mixed speech in time domain is different from a frame sampling rate of the second model for the mixed speech in time domain, the following processing may be further performed:

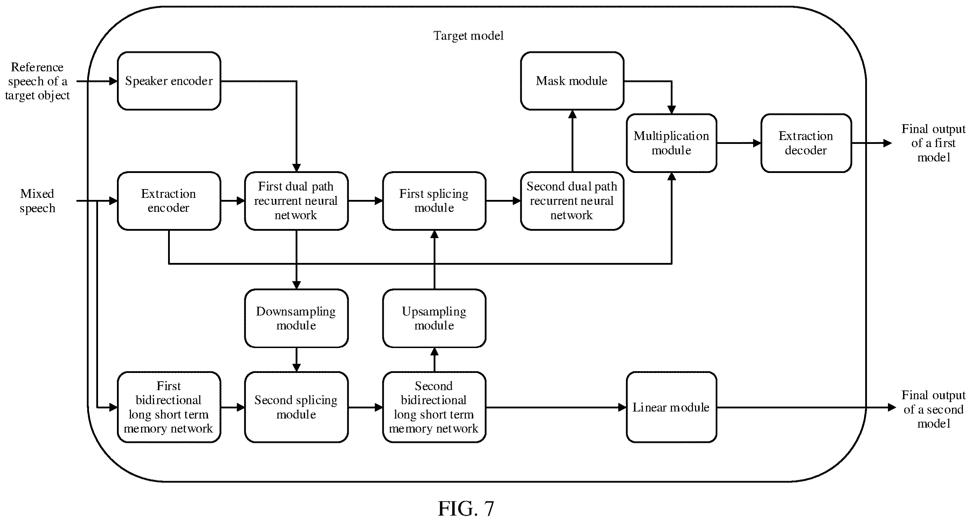

As shown in FIG. 7 (FIG. 7 is a diagram of another structure of the target model according to an embodiment of this application, and FIG. 7 is drawn on the basis of FIG. 6), the target model may further include a third model. The third model includes a downsampling (down sample) module and an upsampling (up sample) module. The downsampling module is disposed between the first dual path recurrent neural network and the second splicing module, and the upsampling module is disposed between the second bidirectional long short term memory network and the first splicing module.

It can be learned from FIG. 7 that the second bidirectional long short term memory network may send the seventh feature of the mixed speech to the upsampling module. Therefore, the upsampling module performs upsampling on the seventh feature of the mixed speech, to obtain an upsampled seventh feature (namely, an upsampled intermediate output of the second model) of the mixed speech, and sends the upsampled seventh feature of the mixed speech to the first splicing module, so that the first splicing module splices the second feature of the mixed speech and the upsampled seventh feature of the mixed speech, to obtain the third feature of the mixed speech.

Correspondingly, the first dual path recurrent neural network may send the second feature of the mixed speech to the downsampling module. Therefore, the downsampling module performs downsampling on the second feature of the mixed speech, to obtain a downsampled second feature (namely, a downsampled intermediate output of the first model) of the mixed speech, and sends the downsampled second feature of the mixed speech to the second splicing module, so that the second splicing module splices the downsampled second feature of the mixed speech and the fifth feature of the mixed speech, to obtain the sixth feature of the mixed speech.

It should be understood that in this embodiment, a quantity of layers included in the first dual path recurrent neural network may be the same as or different from a quantity of layers included in the second dual path recurrent neural network. Similarly, a quantity of layers included in the first bidirectional long short term memory network may be the same as or different from a quantity of layers included in the second bidirectional long short term memory network.

It should be further understood that in this embodiment, if the user does not specify the target object, after the position of the speech of the target object in the mixed speech is determined, all speech segments (including the foregoing target speech segment) that form the speech of the target object may be found in the speech segment set based on the position, and these speech segments are removed from the speech segment set. In this way, a reference speech of a next object may be selected from a remaining speech segment, and the reference speech and the mixed speech are input into the target model again, to obtain a speech of the next object and a position of the speech of the next object in the mixed speech. This process is not described again. Still as in the foregoing example, assuming that a timestamp corresponding to the sub-block A1 in the mixed speech is a time period between the 1st moment and a 100th moment, and a timestamp corresponding to the sub-block A2 in the mixed speech is a time period between the 100th moment and the 200th moment, because the timestamp corresponding to the speech of the target object in the mixed speech is the time period between the 1st moment and the 200th moment, the sub-block A1 and the sub-block A2 may be removed from the set A, and the reference speech of the next object is selected from a remaining sub-block, to continue to obtain the speech, of the next object, included in the mixed speech and a timestamp corresponding to the speech of the next object in the mixed speech.

In this embodiment of this application, after the mixed speech needs to be processed, the mixed speech and the reference speech of the target object may be first obtained, where the mixed speech includes the speech of the target object and the speech of another object other than the target object. Then, the mixed speech and the reference speech may be input into the target model. In this case, the first model in the target model may process the mixed speech, the reference speech, and the intermediate output of the second model, to obtain the intermediate output of the first model and the final output of the first model. In addition, the second model in the target model may process the mixed speech and the intermediate output of the first model, to obtain the intermediate output of the second model and the final output of the second model. Finally, the final output of the first model may be used to obtain the speech of the target object, and the final output of the second model may also be used to determine the position of the speech of the target object in the mixed speech. It can be learned from the foregoing process that, the first model and the second model are used as two branches in the target model; and in a process of separately processing the mixed speech, cross fusion of the intermediate outputs is implemented, to jointly complete two types of tasks: speaker diarization and target speaker speech extraction, for the mixed speech. It can be learned that a new model framework, namely, the target model, provided in this embodiment of this application can simultaneously support the two types of tasks: the speaker diarization and the target speaker speech extraction, thereby helping reduce design costs of speech processing.

Further, in this embodiment of this application, the target model has a multi-task learning mechanism, in other words, in a process of separately performing the target speaker speech extraction and the speaker diarization for the mixed speech, the two branches (the first model and the second model) in the target model fully depend on each other, so that performance of the entire target model in the two types of tasks can be effectively improved, that is, accuracy of speech processing is improved.

Further, in this embodiment of this application, the target speaker may be modeled in a multi-modal fusion manner, so that the user is allowed to specify the target speaker by using different modal information including an image, a speech, a text, an ID, and the like of the target speaker, and the target model can be flexibly applied to a plurality of scenarios.

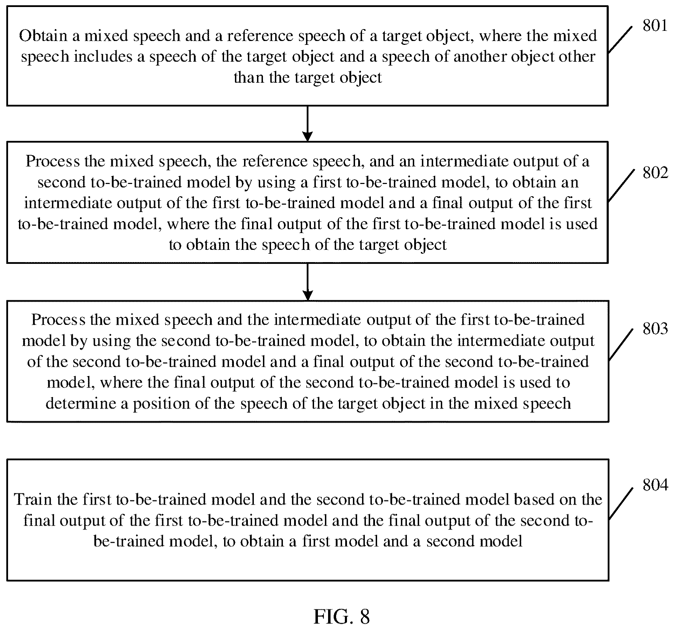

The foregoing describes in detail the speech processing method provided in embodiments of this application. The following describes the model training method provided in embodiments of this application. FIG. 8 is a schematic flowchart of a model training method according to an embodiment of this application. As shown in FIG. 8, the method includes the following steps.

801: Obtain a mixed speech and a reference speech of a target object, where the mixed speech includes a speech of the target object and a speech of another object other than the target object.

In this embodiment, when a first to-be-trained model, a second to-be-trained model, and a third to-be-trained model need to be trained, a batch of training data may be first obtained. The batch of training data includes the mixed speech and the reference speech of the target object, and the mixed speech includes the speech of the target object and the speech of another object other than the target object. It should be noted that, for the mixed speech, a first real processing result of the mixed speech (namely, a speech of a real target object in the mixed speech) and a second real processing result of the mixed speech (namely, real probabilities that speech frames in the mixed speech belong to the target object) are known.

802: Process the mixed speech, the reference speech, and an intermediate output of the second to-be-trained model by using the first to-be-trained model, to obtain an intermediate output of the first to-be-trained model and a final output of the first to-be-trained model, where the final output of the first to-be-trained model is used to obtain the speech of the target object.

803: Process the mixed speech and the intermediate output of the first to-be-trained model by using the second to-be-trained model, to obtain the intermediate output of the second to-be-trained model and a final output of the second to-be-trained model, where the final output of the second to-be-trained model is used to determine a position of the speech of the target object in the mixed speech.

After the mixed speech and the reference speech of the target object are obtained, the mixed speech and the reference speech of the target object may be input into a target model. In this case, the first to-be-trained model in the target model processes the mixed speech, the reference speech, and the intermediate output of the second to-be-trained model, to obtain the intermediate output of the first to-be-trained model and the final output of the first to-be-trained model. In addition, the second to-be-trained model in the target to-be-trained model may process the mixed speech and the intermediate output of the first to-be-trained model, to obtain the intermediate output of the second to-be-trained model and the final output of the second to-be-trained model. It should be noted that the final output of the first to-be-trained model may also be referred to as a first prediction processing result of the mixed speech (namely, the speech, of the target object, obtained through prediction from the mixed speech), and the predicted speech, of the target object, included in the mixed speech may be obtained by using the first prediction processing result of the mixed speech; and the final output of the second to-be-trained model may also be referred to as a second prediction processing result of the mixed speech (namely, prediction probabilities that the speech frames in the mixed speech belong to the target object), and the predicted position of the speech of the target object in the mixed speech, namely, a predicted timestamp corresponding to the speech of the target object in the mixed speech, may be determined by using the second prediction processing result of the mixed speech.

In a possible implementation, processing the mixed speech, the reference speech, and the intermediate output of the second to-be-trained model, to obtain the intermediate output of the first to-be-trained model and the final output of the first to-be-trained model includes: performing first processing on the mixed speech and the reference speech, to obtain the intermediate output of the first to-be-trained model; and performing second processing on the intermediate output of the first to-be-trained model and the intermediate output of the second to-be-trained model, to obtain the final output of the first to-be-trained model.

In a possible implementation, processing the mixed speech and the intermediate output of the first to-be-trained model, to obtain the intermediate output of the second to-be-trained model and the final output of the second to-be-trained model includes: performing third processing on the mixed speech and the intermediate output of the first to-be-trained model, to obtain the intermediate output of the second to-be-trained model; and performing fourth processing on the intermediate output of the second to-be-trained model, to obtain the final output of the second to-be-trained model.

In a possible implementation, the first processing includes at least one of the following: encoding and processing based on a recurrent neural network, and the second processing includes at least one of the following: splicing, processing based on a recurrent neural network, mask prediction, and decoding.

In a possible implementation, the third processing includes at least one of the following: processing based on a bidirectional long short term memory network, and the fourth processing includes at least one of the following: splicing, processing based on a bidirectional long short term memory network, and linear computation.

In a possible implementation, the method further includes: performing upsampling on the intermediate output of the second to-be-trained model by using the third to-be-trained model, to obtain an upsampled intermediate output of the second to-be-trained model; and processing the mixed speech, the reference speech, and the intermediate output of the second to-be-trained model, to obtain the intermediate output of the first to-be-trained model and the final output of the first to-be-trained model includes: processing the mixed speech, the reference speech, and the upsampled intermediate output of the second to-be-trained model, to obtain the intermediate output of the first to-be-trained model and the final output of the first to-be-trained model.

In a possible implementation, the method further includes: performing downsampling on the intermediate output of the first to-be-trained model by using the third to-be-trained model, to obtain a downsampled intermediate output of the first to-be-trained model; and processing the mixed speech and the intermediate output of the first to-be-trained model, to obtain the intermediate output of the second to-be-trained model and the final output of the second to-be-trained model includes: processing the mixed speech and the downsampled intermediate output of the first to-be-trained model, to obtain the intermediate output of the second to-be-trained model and the final output of the second to-be-trained model.

In a possible implementation, obtaining the reference speech of the target object includes: obtaining information about the target object, where the information includes at least one of the following: an image of the target object, a text of the target object, and an identifier of the target object; and obtaining, in a preset speech library, the reference speech of the target object corresponding to the information.

In a possible implementation, obtaining the reference speech of the target object includes: dividing the mixed speech into a plurality of speech segments, where the plurality of speech segments include target speech segments; and if the target speech segments correspond to a same object, determining the object as the target object, and determining the target speech segments as the reference speech of the target object.

It should be noted that for descriptions of step 802 and step 803, refer to related descriptions of step 502 and step 503 in the embodiment shown in FIG. 5. Details are not described herein again.

804: Train the first to-be-trained model and the second to-be-trained model based on the final output of the first to-be-trained model and the final output of the second to-be-trained model, to obtain a first model and a second model.

After the first prediction processing result of the mixed speech and the second prediction processing result of the mixed speech are obtained, the first to-be-trained model, the second to-be-trained model, and the third to-be-trained model may be trained based on the first prediction processing result of the mixed speech and the second prediction processing result of the mixed speech, to obtain the first model, the second model, and a third model.

Specifically, the first model, the second model, and the third model may be obtained through training in the following manners:

Because the first real processing result of the mixed speech is known, the first prediction processing result of the mixed speech and the first real processing result of the mixed speech may be computed by using a first loss function, to obtain a first loss, where the first loss indicates a difference between the first prediction processing result of the mixed speech and the first real processing result of the mixed speech. The first loss function is shown in the following formula:

$$L_{SE} = -10 \log_{10} \frac{\left\| \frac{\langle \hat{s}, s \rangle s}{\|s\|^2 + \varepsilon} \right\|^2}{\left\| \hat{s} - \frac{\langle \hat{s}, s \rangle s}{\|s\|^2 + \varepsilon} \right\|^2 + \varepsilon} + \varepsilon \qquad (2)$$

In the foregoing formula, $L_{SE}$ is the first loss, $\hat{s}$ is the first prediction processing result of the mixed speech (namely, the speech, of the target object, obtained through prediction), S is the first real processing result of the mixed speech (namely, the speech of the real target object), $\varepsilon$ and is an offset parameter.

(2) Because the second real processing result of the mixed speech is known, the second prediction processing result of the mixed speech and the second real processing result of the mixed speech may be computed by using a second loss function, to obtain a second loss, where the second loss indicates a difference between the second prediction processing result of the mixed speech and the second real processing result of the mixed speech. The second loss function is shown in the following formula:

$$L_{SD} = \frac{1}{T} \sum_{t=1}^{T} BCE(y_t, p_t^{sg}) \qquad (3)$$

In the foregoing formula, $L_{SD}$ is the second loss, $y_t$ is the second real processing result of the mixed speech (namely, the real probabilities that the speech frames in the mixed speech belong to the target object), and $p_t^{sg}$ is the second prediction processing result of the mixed speech (namely, the prediction probabilities that the speech frames in the mixed speech belong to the target object).

(3) A feature (which is from a speaker encoder in the first model) of the reference speech of the target object and a feature (which is from a multiplication module in the first model) of the predicted speech of the target object are computed by using a third loss function, to obtain a third loss, where the third loss indicates a difference between the feature of the reference speech of the target object and the feature of the predicted speech of the target object. The third loss function is similar to the second loss function, and the third loss may be represented as $L_{spk}$.

(4) The first loss, the second loss, and the third loss are superimposed to obtain a target loss, that is:

$$L = \lambda_1 L_{SE} + \lambda_2 L_{SD} + \lambda_3 L_{spk} \qquad (4)$$

In the foregoing formula, L is the target loss.

(5) After the target loss is obtained, the parameter of the first to-be-trained model, a model parameter of the second to-be-trained model, and a model parameter of the third to-be-trained model may be updated based on the target loss, to obtain an updated first to-be-trained model, an updated second to-be-trained model, and an updated third to-be-trained model; and the updated first to-be-trained model, the updated second to-be-trained model, and the updated third to-be-trained model continue to be trained by using a next batch of training data (that is, step 801 to step 804 are performed again), until a model training condition is met (for example, the target loss reaches convergence), so that the first model, the second model, and the third model, namely, the target model, shown in FIG. 4 or FIG. 7 can be obtained.

The target model obtained through training in this embodiment of this application has speech processing functions (namely, a speaker diarization function and a target speaker speech extraction function). Specifically, after the mixed speech needs to be processed, the mixed speech and the reference speech of the target object may be first obtained, where the mixed speech includes the speech of the target object and the speech of another object other than the target object. Then, the mixed speech and the reference speech may be input into the target model. In this case, the first model in the target model may process the mixed speech, the reference speech, and the intermediate output of the second model, to obtain the intermediate output of the first model and the final output of the first model. In addition, the second model in the target model may process the mixed speech and the intermediate output of the first model, to obtain the intermediate output of the second model and the final output of the second model. Finally, the final output of the first model may be used to obtain the speech of the target object, and the final output of the second model may also be used to determine the position of the speech of the target object in the mixed speech. It can be learned from the foregoing process that, the first model and the second model are used as two branches in the target model; and in a process of separately processing the mixed speech, cross fusion of the intermediate outputs is implemented, to jointly complete two types of tasks: speaker diarization and target speaker speech extraction, for the mixed speech. It can be learned that a new model framework, namely, the target model, provided in this embodiment of this application can simultaneously support the two types of tasks: the speaker diarization and the target speaker speech extraction, thereby helping reduce design costs of speech processing.

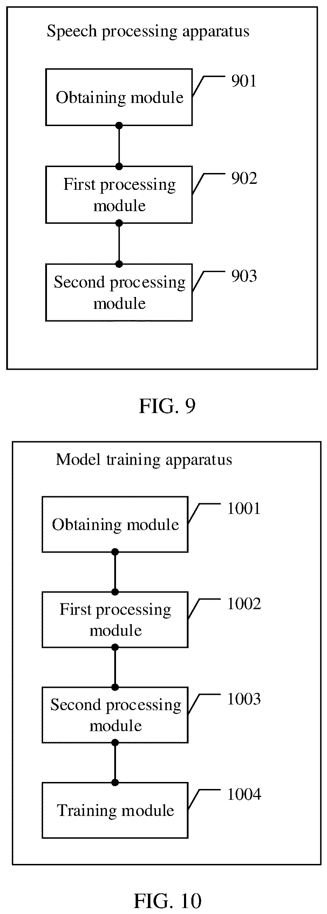

The foregoing specifically describes the speech processing method and the model training method provided in embodiments of this application. The following describes a speech processing apparatus and a model training apparatus provided in embodiments of this application. FIG. 9 is a diagram of a structure of a speech processing apparatus according to an embodiment of this application. As shown in FIG. 9, the apparatus includes:

an obtaining module 901, configured to obtain a mixed speech and a reference speech of a target object, where the mixed speech includes a speech of the target object and a speech of another object other than the target object;

a first processing module 902, configured to process the mixed speech, the reference speech, and an intermediate output of a second model by using a first model, to obtain an intermediate output of the first model and a final output of the first model, where the final output of the first model is used to obtain the speech of the target object; and

a second processing module 903, configured to process the mixed speech and the intermediate output of the first model by using the second model, to obtain the intermediate output of the second model and a final output of the second model, where the final output of the second model is used to determine a position of the speech of the target object in the mixed speech.

In this embodiment of this application, after the mixed speech needs to be processed, the mixed speech and the reference speech of the target object may be first obtained, where the mixed speech includes the speech of the target object and the speech of another object other than the target object. Then, the mixed speech and the reference speech may be input into a target model. In this case, the first model in the target model may process the mixed speech, the reference speech, and the intermediate output of the second model, to obtain the intermediate output of the first model and the final output of the first model. In addition, the second model in the target model may process the mixed speech and the intermediate output of the first model, to obtain the intermediate output of the second model and the final output of the second model. Finally, the final output of the first model may be used to obtain the speech of the target object, and the final output of the second model may also be used to determine the position of the speech of the target object in the mixed speech. It can be learned from the foregoing process that, the first model and the second model are used as two branches in the target model; and in a process of separately processing the mixed speech, cross fusion of the intermediate outputs is implemented, to jointly complete two types of tasks: speaker diarization and target speaker speech extraction, for the mixed speech. It can be learned that a new model framework, namely, the target model, provided in this embodiment of this application can simultaneously support the two types of tasks: the speaker diarization and the target speaker speech extraction, thereby helping reduce design costs of speech processing.

In a possible implementation, the first processing module 902 is configured to: perform first processing on the mixed speech and the reference speech, to obtain the intermediate output of the first model; and perform second processing on the intermediate output of the first model and the intermediate output of the second model, to obtain the final output of the first model.

In a possible implementation, the second processing module 903 is configured to: perform third processing on the mixed speech and the intermediate output of the first model, to obtain the intermediate output of the second model; and perform fourth processing on the intermediate output of the second model, to obtain the final output of the second model.

In a possible implementation, the first processing includes at least one of the following: encoding and processing based on a recurrent neural network, and the second processing includes at least one of the following: splicing, processing based on a recurrent neural network, mask prediction, and decoding.

In a possible implementation, the third processing includes at least one of the following: processing based on a bidirectional long short term memory network, and the fourth processing includes at least one of the following: splicing, processing based on a bidirectional long short term memory network, and linear computation.

In a possible implementation, the apparatus further includes: an upsampling module, configured to perform upsampling on the intermediate output of the second model by using a third model, to obtain an upsampled intermediate output of the second model, where the first processing module 902 is configured to process the mixed speech, the reference speech, and the upsampled intermediate output of the second model, to obtain the intermediate output of the first model and the final output of the first model.

In a possible implementation, the apparatus further includes: a downsampling module, configured to perform downsampling on the intermediate output of the first model by using the third model, to obtain a downsampled intermediate output of the first model, where the second processing module 903 is configured to process the mixed speech and the downsampled intermediate output of the first model, to obtain the intermediate output of the second model and the final output of the second model.

In a possible implementation, the obtaining module 901 is configured to: obtain information about the target object, where the information includes at least one of the following: an image of the target object, a text of the target object, and an identifier of the target object; and obtain, in a preset speech library, the reference speech of the target object corresponding to the information.

In a possible implementation, the obtaining module 901 is configured to: divide the mixed speech into a plurality of speech segments, where the plurality of speech segments include target speech segments; and if the target speech segments correspond to a same object, determine the object as the target object, and determine the target speech segments as the reference speech of the target object.

FIG. 10 is a diagram of a structure of a model training apparatus according to an embodiment of this application. As shown in FIG. 10, the apparatus includes:

an obtaining module 1001, configured to obtain a mixed speech and a reference speech of a target object, where the mixed speech includes a speech of the target object and a speech of another object other than the target object;

a first processing module 1002, configured to process the mixed speech, the reference speech, and an intermediate output of a second to-be-trained model by using a first to-be-trained model, to obtain an intermediate output of the first to-be-trained model and a final output of the first to-be-trained model, where the final output of the first to-be-trained model is used to obtain the speech of the target object;

a second processing module 1003, configured to process the mixed speech and the intermediate output of the first to-be-trained model by using the second to-be-trained model, to obtain the intermediate output of the second to-be-trained model and a final output of the second to-be-trained model, where the final output of the second to-be-trained model is used to determine a position of the speech of the target object in the mixed speech; and

a training module 1004, configured to train the first to-be-trained model and the second to-be-trained model based on the final output of the first to-be-trained model and the final output of the second to-be-trained model, to obtain a first model and a second model.

A target model obtained through training in this embodiment of this application has speech processing functions (namely, a speaker diarization function and a target speaker speech extraction function). Specifically, after the mixed speech needs to be processed, the mixed speech and the reference speech of the target object may be first obtained, where the mixed speech includes the speech of the target object and the speech of another object other than the target object. Then, the mixed speech and the reference speech may be input into a target model. In this case, the first model in the target model may process the mixed speech, the reference speech, and the intermediate output of the second model, to obtain the intermediate output of the first model and the final output of the first model. In addition, the second model in the target model may process the mixed speech and the intermediate output of the first model, to obtain the intermediate output of the second model and the final output of the second model. Finally, the final output of the first model may be used to obtain the speech of the target object, and the final output of the second model may also be used to determine the position of the speech of the target object in the mixed speech. It can be learned from the foregoing process that, the first model and the second model are used as two branches in the target model; and in a process of separately processing the mixed speech, cross fusion of the intermediate outputs is implemented, to jointly complete two types of tasks: speaker diarization and target speaker speech extraction, for the mixed speech. It can be learned that a new model framework, namely, the target model, provided in this embodiment of this application can simultaneously support the two types of tasks: the speaker diarization and the target speaker speech extraction, thereby helping reduce design costs of speech processing.

In a possible implementation, the first processing module 1002 is configured to: perform first processing on the mixed speech and the reference speech, to obtain the intermediate output of the first to-be-trained model; and perform second processing on the intermediate output of the first to-be-trained model and the intermediate output of the second to-be-trained model, to obtain the final output of the first to-be-trained model.

In a possible implementation, the second processing module 1003 is configured to: perform third processing on the mixed speech and the intermediate output of the first to-be-trained model, to obtain the intermediate output of the second to-be-trained model; and perform fourth processing on the intermediate output of the second to-be-trained model, to obtain the final output of the second to-be-trained model.

In a possible implementation, the first processing includes at least one of the following: encoding and processing based on a recurrent neural network, and the second processing includes at least one of the following: splicing, processing based on a recurrent neural network, mask prediction, and decoding.

In a possible implementation, the third processing includes at least one of the following: processing based on a bidirectional long short term memory network, and the fourth processing includes at least one of the following: splicing, processing based on a bidirectional long short term memory network, and linear computation.

In a possible implementation, the apparatus further includes: an upsampling module, configured to perform upsampling on the intermediate output of the second to-be-trained model by using a third to-be-trained model, to obtain an upsampled intermediate output of the second to-be-trained model, where the first processing module 1002 is configured to process the mixed speech, the reference speech, and the upsampled intermediate output of the second to-be-trained model, to obtain the intermediate output of the first to-be-trained model and the final output of the first to-be-trained model.

**In** a possible implementation, the apparatus further includes: a downsampling module, configured to perform downsampling on the intermediate output of the first to-be-trained model by using the third to-be-trained model, to obtain a downsampled intermediate output of the first to-be-trained model, where the second processing module 1003 is configured to process the mixed speech and the downsampled intermediate output of the first to-be-trained model, to obtain the intermediate output of the second to-be-trained model and the final output of the second to-be-trained model.

In a possible implementation, the obtaining module 1001 is configured to: obtain information about the target object, where the information includes at least one of the following: an image of the target object, a text of the target object, and an identifier of the target object; and obtain, in a preset speech library, the reference speech of the target object corresponding to the information.

In a possible implementation, the obtaining module 1001 is configured to: divide the mixed speech into a plurality of speech segments, where the plurality of speech segments include target speech segments; and if the target speech segments correspond to a same object, determine the object as the target object, and determine the target speech segments as the reference speech of the target object.

In a possible implementation, the training module 1004 is configured to: obtain a target loss based on the final output of the first to-be-trained model (namely, a first prediction processing result of the foregoing mixed speech), a real output of the first to-be-trained model (namely, a first real processing result of the foregoing mixed speech), the final output of the second to-be-trained model (namely, a second prediction processing result of the foregoing mixed speech), and a real output of the second to-be-trained model (namely, a second real processing result of the foregoing mixed speech), where the target loss indicates a difference between the final output of the first to-be-trained model and the real output of the first to-be-trained model and a difference between the final output of the second to-be-trained model and the real output of the second to-be-trained model; and update, based on the target loss, a parameter of the first to-be-trained model and a parameter of the second to-be-trained model until a model training condition is met, to obtain the first model and the second model.

In a possible implementation, the training module 1004 is further configured to update the parameter of the first to-be-trained model based on the target loss until the model training condition is met, to obtain a third model.

It should be noted that, content such as information exchange between the modules/units of the apparatuses and an execution process is based on the same concept as the method embodiments of this application, and produces the same technical effect as those of the method embodiments of this application. For specific content, refer to the foregoing descriptions in the method embodiments in embodiments of this application. Details are not described herein again.

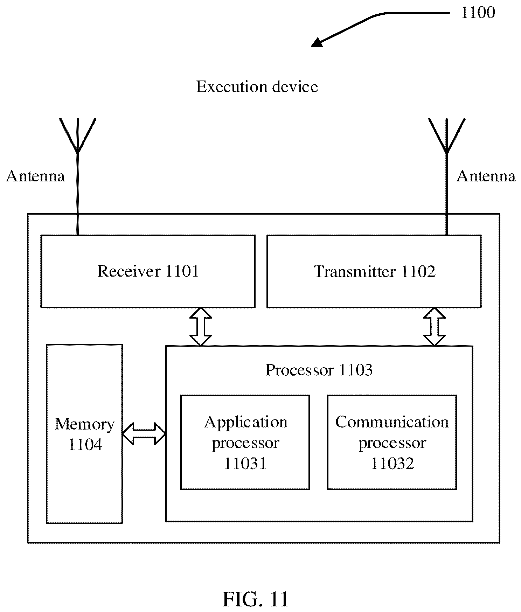

An embodiment of this application further relates to an execution device. FIG. 11 is a diagram of a structure of an execution device according to an embodiment of this application. As shown in FIG. 11, the execution device 1100 may be specifically represented as a mobile phone, a tablet, a notebook computer, an intelligent wearable device, a server, or the like. This is not limited herein. The speech processing apparatus described in the embodiment corresponding to FIG. 9 may be deployed on the execution device 1100, and is configured to implement the speech processing function in the embodiment corresponding to FIG. 5. Specifically, the execution device 1100 includes a receiver 1101, a transmitter 1102, a processor 1103, and a memory 1104 (there may be one or more processors 1103 in the execution device 1100, and one processor is used as an example in FIG. 11). The processor 1103 may include an application processor 11031 and a communication processor 11032. In some embodiments of this application, the receiver 1101, the transmitter 1102, the processor 1103, and the memory 1104 may be connected through a bus or in another manner.

The memory 1104 may include a read-only memory and a random access memory, and provide instructions and data to the processor 1103. A part of the memory 1104 may further include a non-volatile random access memory (non-volatile random access memory, NVRAM). The memory 1104 stores a processor and operation instructions, an executable module, a data structure, a subset thereof, or an extension set thereof. The operation instructions may include various operation instructions for implementing various operations.

The processor 1103 controls an operation of the execution device. During specific application, components of the execution device are coupled together through a bus system. In addition to a data bus, the bus system may further include a power bus, a control bus, a status signal bus, and the like. However, for clear description, various types of buses in the figure are marked as the bus system.

The methods disclosed in the foregoing embodiment of this application may be applied to the processor 1103, or implemented by the processor 1103. The processor 1103 may be an integrated circuit chip and has a signal processing capability. In an implementation process, steps of the foregoing methods may be completed through an integrated logic circuit of hardware in the processor 1103 or by using instructions in a form of software. The processor 1103 may be a general-purpose processor, a digital signal processor (digital signal processing, DSP), a microprocessor, or a microcontroller; or may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1103 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1104, and the processor 1103 reads information in the memory 1104 and completes the steps in the foregoing methods in combination with hardware of the processor.

The receiver 1101 may be configured to: receive input digit or character information, and generate a signal input related to a related setting and function control of the execution device. The transmitter 1102 may be configured to output the digital or character information through a first interface. The transmitter 1102 may be further configured to send instructions to a disk group through the first interface, to modify data in the disk group. The transmitter 1102 may further include a display device such as a display.

In this embodiment of this application, in one case, the processor 1103 is configured to generate a processing result of a mixed speech by using the target model in the embodiment corresponding to FIG. 5.

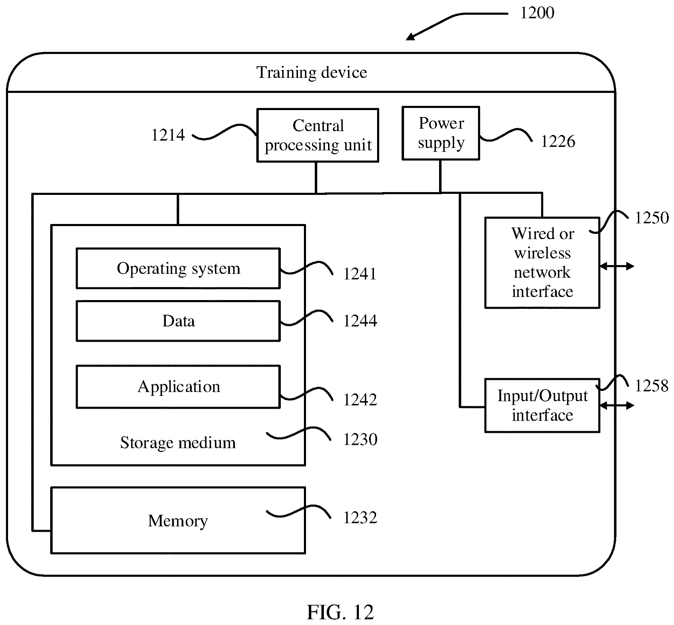

An embodiment of this application further relates to a training device. FIG. 12 is a diagram of a structure of a training device according to an embodiment of this application. As shown in FIG. 12, the training device 1200 is implemented by one or more servers. The training device 1200 may vary greatly due to different configurations or performance, and may include one or more central processing units (central processing units, CPU) 1214 (for example, one or more processors), a memory 1232, and one or more storage media 1230 (for example, one or more mass storage devices) that store an application 1242 or data 1244. The memory 1232 and the storage medium 1230 may be transient storage or persistent storage. A program stored in the storage medium 1230 may include one or more modules (not shown in the figure), and each module may include a series of instruction operations for the training device. Further, the central processing unit 1214 may be configured to communicate with the storage medium 1230, and perform, on the training device 1200, the series of instruction operations in the storage medium 1230.

The training device 1200 may further include one or more power supplies 1226, one or more wired or wireless network interfaces 1250, one or more input/output interfaces 1258, or one or more operating systems 1241, for example, Windows ServerTM, Mac OS XTM, UnixTM, LinuxTM, and FreeBSDTM.

Specifically, the training device may perform the model training method in the embodiment corresponding to FIG. 8.

An embodiment of this application further relates to a computer storage medium. The computer-readable storage medium stores a program used for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

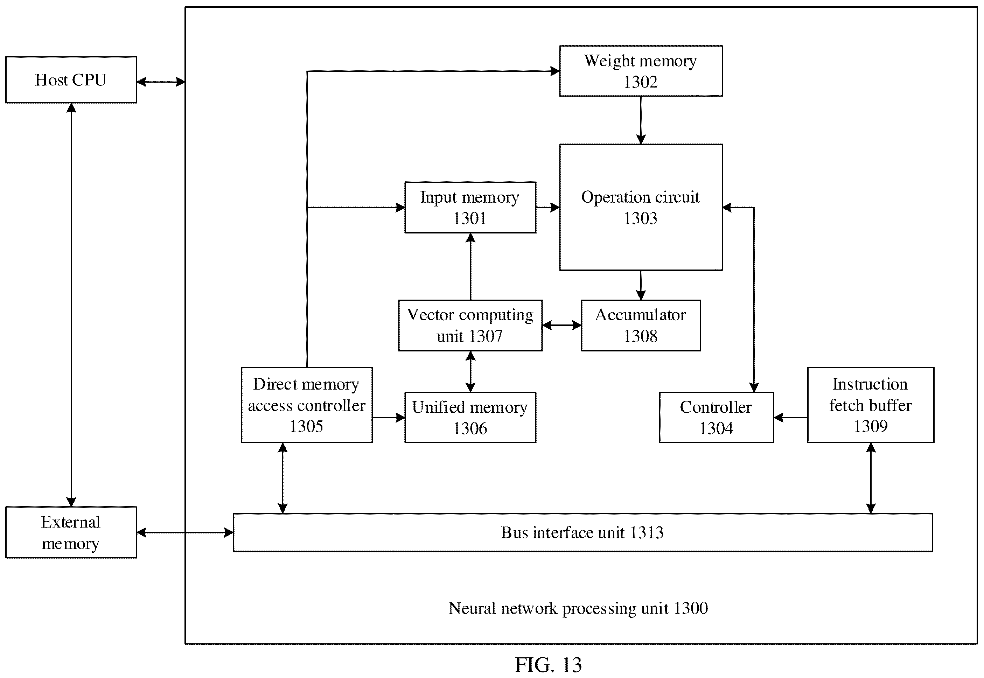

Specifically, FIG. 13 is a diagram of a structure of a chip according to an embodiment of this application. The chip may be represented as a neural network processing unit NPU 1300. The NPU 1300 is mounted to a host CPU (Host CPU) as a coprocessor. The host CPU allocates a task. A core part of the NPU is an operation circuit 1303, and a controller 1304 controls the operation circuit 1303 to extract matrix data in a memory and performs a multiplication operation.

In some implementations, the operation circuit 1303 includes a plurality of process engines (Process Engines, PE). In some implementations, the operation circuit 1303 is a two-dimensional systolic array. The operation circuit 1303 may alternatively be a one-dimensional systolic array or another electronic circuit capable of performing mathematical operations such as multiplication and addition. In some implementations, the operation circuit 1303 is a general-purpose matrix processor.

For example, assuming that there is an input matrix A, a weight matrix B, and an output matrix C, the operation circuit fetches, from the weight memory 1302, data corresponding to the matrix B, and buffers the data on each PE in the operation circuit; and the operation circuit fetches data of the matrix A from an input memory 1301 to perform a matrix operation on the matrix B, and stores an obtained partial result or an obtained final result of the matrix in an accumulator (accumulator) 1308.

A unified memory 1306 is configured to store input data and output data. Weight data is directly transferred to the weight memory 1302 through a direct memory access controller (Direct Memory Access Controller, DMAC) 1305. The input data is also transferred to the unified memory 1306 through the DMAC.

A BIU is a bus interface unit, namely, a bus interface unit 1313, and is used for interaction between an AXI bus and the DMAC and between the AXI bus and an instruction fetch buffer (Instruction Fetch Buffer, IFB) 1309.

The bus interface unit (Bus Interface Unit, BIU for short) 1313 is used by the instruction fetch buffer 1309 to obtain instructions from an external memory, and is further used by the direct memory access controller 1305 to obtain original data of the input matrix A or the weight matrix B from the external memory.

The DMAC is mainly configured to transfer input data in the external memory DDR to the unified memory 1306, transfer the weight data to the weight memory 1302, or transfer the input data to the input memory 1301.

A vector computing unit 1307 includes a plurality of operation processing units; and if necessary, performs further processing such as vector multiplication, vector addition, an exponential operation, a logarithmic operation, or value comparison on an output of the operation circuit 1303. The vector computing unit 1307 is mainly configured to perform network computing at a non-convolutional/fully-connected layer in a neural network, for example, batch normalization (batch normalization), pixel-level summation, and upsampling of a predicted label plane.

In some implementations, the vector computing unit 1307 can store a processed output vector in the unified memory 1306. For example, the vector computing unit 1307 may apply a linear function or a non-linear function to the output of the operation circuit 1303, for example, perform linear interpolation on a predicted label plane extracted from a convolutional layer, and for another example, obtain a vector of an accumulated value to generate an activation value. In some implementations, the vector computing unit 1307 generates a normalized value, a value obtained through pixel-level summation, or both a normalized value and a value obtained through pixel-level summation. In some implementations, the processed output vector can be used as an activation input to the operation circuit 1303. For example, the processed output vector can be used at a subsequent layer in the neural network.

The instruction fetch buffer (instruction fetch buffer) 1309 connected to the controller 1304 is configured to store instructions used by the controller 1304.

The unified memory 1306, the input memory 1301, the weight memory 1302, and the instruction fetch buffer 1309 are all on-chip memories. The external memory is private for a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiments are merely examples. The units described as separate parts may or may not be physically separate, and parts displayed as units may or may not be physical units, may be located in one position, or may be distributed on a plurality of network units. Some or all the modules may be selected based on an actual requirement to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, and certainly may be alternatively implemented by dedicated hardware, including a dedicated integrated circuit, a dedicated CPU, a dedicated memory, a dedicated component, and the like. Usually, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement embodiments, all or some of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A speech processing method, wherein the method comprises:

   obtaining a mixed speech and a reference speech of a target object, wherein the mixed speech comprises a speech of the target object and a speech of another object other than the target object;

   processing the mixed speech, the reference speech, and an intermediate output of a second model by using a first model, to obtain an intermediate output of the first model and a final output of the first model, wherein the final output of the first model is used to obtain the speech of the target object; and

   processing the mixed speech and the intermediate output of the first model by using the second model, to obtain the intermediate output of the second model and a final output of the second model, wherein the final output of the second model is used to determine a position of the speech of the target object in the mixed speech.

2. The method according to claim 1, wherein processing the mixed speech, the reference speech, and the intermediate output of the second model, to obtain the intermediate output of the first model and the final output of the first model comprises:

   performing first processing on the mixed speech and the reference speech, to obtain the intermediate output of the first model; and

   performing second processing on the intermediate output of the first model and the intermediate output of the second model, to obtain the final output of the first model.

3. The method according to claim 1, wherein processing the mixed speech and the intermediate output of the first model, to obtain the intermediate output of the second model and the final output of the second model comprises:

   performing third processing on the mixed speech and the intermediate output of the first model, to obtain the intermediate output of the second model; and

   performing fourth processing on the intermediate output of the second model, to obtain the final output of the second model.

4. The method according to claim 2, wherein the first processing comprises at least one of the following: encoding and processing based on a recurrent neural network, and the second processing comprises at least one of the following: splicing, processing based on a recurrent neural network, mask prediction, and decoding.

5. The method according to claim 3, wherein the third processing comprises at least one of the following: processing based on a bidirectional long short term memory network, and the fourth processing comprises at least one of the following: splicing, processing based on a bidirectional long short term memory network, and linear computation.

6. The method according to any one of claims 1 to 5, wherein the method further comprises:

performing upsampling on the intermediate output of the second model by using a third model, to obtain an upsampled intermediate output of the second model; and

processing the mixed speech, the reference speech, and the intermediate output of the second model, to obtain the intermediate output of the first model and the final output of the first model comprises:

processing the mixed speech, the reference speech, and the upsampled intermediate output of the second model, to obtain the intermediate output of the first model and the final output of the first model.

7. The method according to any one of claims 1 to 6, wherein the method further comprises:

performing downsampling on the intermediate output of the first model by using the third model, to obtain a downsampled intermediate output of the first model; and

processing the mixed speech and the intermediate output of the first model, to obtain the intermediate output of the second model and the final output of the second model comprises:

processing the mixed speech and the downsampled intermediate output of the first model, to obtain the intermediate output of the second model and the final output of the second model.

8. The method according to any one of claims 1 to 7, wherein obtaining the reference speech of the target object comprises:

obtaining information about the target object, wherein the information comprises at least one of the following: an image of the target object, a text of the target object, and an identifier of the target object; and

obtaining, in a preset speech library, the reference speech of the target object corresponding to the information.

9. The method according to any one of claims 1 to 7, wherein obtaining the reference speech of the target object comprises:

dividing the mixed speech into a plurality of speech segments, wherein the plurality of speech segments comprise target speech segments; and

if the target speech segments correspond to a same object, determining the object as the target object, and determining the target speech segments as the reference speech of the target object.

10. A model training method, wherein the method comprises:

obtaining a mixed speech and a reference speech of a target object, wherein the mixed speech comprises a speech of the target object and a speech of another object other than the target object;

processing the mixed speech, the reference speech, and an intermediate output of a second to-be-trained model by using a first to-be-trained model, to obtain an intermediate output of the first to-be-trained model and a final output of the first to-be-trained model, wherein the final output of the first to-be-trained model is used to obtain the speech of the target object;

processing the mixed speech and the intermediate output of the first to-be-trained model by using the second to-be-trained model, to obtain the intermediate output of the second to-be-trained model and a final output of the second to-be-trained model, wherein the final output of the second to-be-trained model is used to determine a position of the speech of the target object in the mixed speech; and

training the first to-be-trained model and the second to-be-trained model based on the final output of the first to-be-trained model and the final output of the second to-be-trained model, to obtain a first model and a second model.

11. The method according to claim 10, wherein processing the mixed speech, the reference speech, and the intermediate output of the second to-be-trained model, to obtain the intermediate output of the first to-be-trained model and the final output of the first to-be-trained model comprises:

performing first processing on the mixed speech and the reference speech, to obtain the intermediate output of the first to-be-trained model; and

performing second processing on the intermediate output of the first to-be-trained model and the intermediate output of the second to-be-trained model, to obtain the final output of the first to-be-trained model.

12. The method according to claim 10, wherein processing the mixed speech and the intermediate output of the first to-be-trained model, to obtain the intermediate output of the second to-be-trained model and the final output of the second to-be-trained model comprises:

performing third processing on the mixed speech and the intermediate output of the first to-be-trained model, to obtain the intermediate output of the second to-be-trained model; and
performing fourth processing on the intermediate output of the second to-be-trained model, to obtain the final output of the second to-be-trained model.

13. The method according to claim 11, wherein the first processing comprises at least one of the following: encoding and processing based on a recurrent neural network, and the second processing comprises at least one of the following: splicing, processing based on a recurrent neural network, mask prediction, and decoding.

14. The method according to claim 12, wherein the third processing comprises at least one of the following: processing based on a bidirectional long short term memory network, and the fourth processing comprises at least one of the following: splicing, processing based on a bidirectional long short term memory network, and linear computation.

15. The method according to any one of claims 10 to 14, wherein the method further comprises:

performing upsampling on the intermediate output of the second to-be-trained model by using a third to-be-trained model, to obtain an upsampled intermediate output of the second to-be-trained model; and
processing the mixed speech, the reference speech, and the intermediate output of the second to-be-trained model, to obtain the intermediate output of the first to-be-trained model and the final output of the first to-be-trained model comprises:
processing the mixed speech, the reference speech, and the upsampled intermediate output of the second to-be-trained model, to obtain the intermediate output of the first to-be-trained model and the final output of the first to-be-trained model.

16. The method according to any one of claims 10 to 15, wherein the method further comprises:

performing downsampling on the intermediate output of the first to-be-trained model by using the third to-be-trained model, to obtain a downsampled intermediate output of the first to-be-trained model; and
processing the mixed speech and the intermediate output of the first to-be-trained model, to obtain the intermediate output of the second to-be-trained model and the final output of the second to-be-trained model comprises:
processing the mixed speech and the downsampled intermediate output of the first to-be-trained model, to obtain the intermediate output of the second to-be-trained model and the final output of the second to-be-trained model.

17. The method according to any one of claims 10 to 16, wherein obtaining the reference speech of the target object comprises:

obtaining information about the target object, wherein the information comprises at least one of the following: an image of the target object, a text of the target object, and an identifier of the target object; and
obtaining, in a preset speech library, the reference speech of the target object corresponding to the information.

18. The method according to any one of claims 10 to 16, wherein obtaining the reference speech of the target object comprises:

dividing the mixed speech into a plurality of speech segments, wherein the plurality of speech segments comprise target speech segments; and
if the target speech segments correspond to a same object, determining the object as the target object, and determining the target speech segments as the reference speech of the target object.

19. A speech processing apparatus, wherein the apparatus comprises:

an obtaining module, configured to obtain a mixed speech and a reference speech of a target object, wherein the mixed speech comprises a speech of the target object and a speech of another object other than the target object;
a first processing module, configured to process the mixed speech, the reference speech, and an intermediate output of a second model by using a first model, to obtain an intermediate output of the first model and a final output of the first model, wherein the final output of the first model is used to obtain the speech of the target object; and
a second processing module, configured to process the mixed speech and the intermediate output of the first model by using the second model, to obtain the intermediate output of the second model and a final output of the second model, wherein the final output of the second model is used to determine a position of the speech of the target object in the mixed speech.

20. A model training apparatus, wherein the apparatus comprises:

an obtaining module, configured to obtain a mixed speech and a reference speech of a target object, wherein the mixed speech comprises a speech of the target object and a speech of another object other than the target object;
a first processing module, configured to process the mixed speech, the reference speech, and an intermediate output of a second to-be-trained model by using a first to-be-trained model, to obtain an intermediate output of the first to-be-trained model and a final output of the first to-be-trained model, wherein the final output of the first to-be-trained model is used to obtain the speech of the target object;
a second processing module, configured to process the mixed speech and the intermediate output of the first to-be-trained model by using the second to-be-trained model, to obtain the intermediate output of the second to-be-trained model and a final output of the second to-be-trained model, wherein the final output of the second to-be-trained model is used to determine a position of the speech of the target object in the mixed speech; and
a training module, configured to train the first to-be-trained model and the second to-be-trained model based on the final output of the first to-be-trained model and the final output of the second to-be-trained model, to obtain a first model and a second model.

21. A speech processing apparatus, wherein the apparatus comprises a memory and a processor, the memory stores code, and the processor is configured to execute the code; and when the code is executed, the speech processing apparatus performs the method according to any one of claims 1 to 18.

22. A computer storage medium, wherein the computer storage medium stores one or more instructions; and when the instructions are executed by one or more computers, the one or more computers are enabled to implement the method according to any one of claims 1 to 18.

23. A computer program product, wherein the computer program product stores instructions; and when the instructions are executed by a computer, the computer is enabled to implement the method according to any one of claims 1 to 18.

FIG. 1

EP 4 664 456 A1

| Interaction interface | | |
|---|---|---|
| | Mixed speech | Processing result of the mixed speech |
| Memory | Processor | Data training/Machine learning/Deep learning | Searching/Inference/ Decision-making ... |

Data processing device (server)

FIG. 2a

Interaction interface

Mixed speech

Processing result of the mixed speech

Processor:

Data training/Machine learning/Deep learning

Searching/Inference/ Decision-making

...

Memory

Intelligent terminal

Intelligent terminal

User

13:21

FIG. 2b

300

Execution device 210

Data storage
system 250

... 

Communication network

Local device
301

Local device
302

For example

FIG. 2c

FIG. 3

FIG. 4

Obtain a mixed speech and a reference speech of a target object, where the mixed speech includes a speech of the target object and a speech of another object other than the target object  / 501

Process the mixed speech, the reference speech, and an intermediate output of a second model by using a first model, to obtain an intermediate output of the first model and a final output of the first model, where the final output of the first model is used to obtain the speech of the target object  / 502

Process the mixed speech and the intermediate output of the first model by using the second model, to obtain the intermediate output of the second model and a final output of the second model, where the final output of the second model is used to determine a position of the speech of the target object in the mixed speech  / 503

FIG. 5

FIG. 6

Target model

Reference speech of a target object → Speaker encoder

Mixed speech → Extraction encoder → First dual path recurrent neural network → First splicing module → Second dual path recurrent neural network → Mask module → Multiplication module → Extraction decoder → Final output of a first model

First dual path recurrent neural network → Downsampling module → Second splicing module → Second bidirectional long short term memory network → Upsampling module → First splicing module

Mixed speech → First bidirectional long short term memory network → Second splicing module

Second bidirectional long short term memory network → Linear module → Final output of a second model

FIG. 7

Obtain a mixed speech and a reference speech of a target object, where the mixed speech includes a speech of the target object and a speech of another object other than the target object — 801

Process the mixed speech, the reference speech, and an intermediate output of a second to-be-trained model by using a first to-be-trained model, to obtain an intermediate output of the first to-be-trained model and a final output of the first to-be-trained model, where the final output of the first to-be-trained model is used to obtain the speech of the target object — 802

Process the mixed speech and the intermediate output of the first to-be-trained model by using the second to-be-trained model, to obtain the intermediate output of the second to-be-trained model and a final output of the second to-be-trained model, where the final output of the second to-be-trained model is used to determine a position of the speech of the target object in the mixed speech — 803

Train the first to-be-trained model and the second to-be-trained model based on the final output of the first to-be-trained model and the final output of the second to-be-trained model, to obtain a first model and a second model — 804

FIG. 8

Speech processing apparatus

Obtaining module — 901

First processing module — 902

Second processing module — 903

FIG. 9

Model training apparatus

Obtaining module — 1001

First processing module — 1002

Second processing module — 1003

Training module — 1004

FIG. 10

1100

Execution device

FIG. 11

FIG. 12

FIG. 13

## INTERNATIONAL SEARCH REPORT

| International application No. |
|---|
| **PCT/CN2024/078946** |

**A. CLASSIFICATION OF SUBJECT MATTER**

G10L21/028(2013.01)i; G10L21/0272(2013.01)i; G10L15/16(2006.01)i

According to International Patent Classification (IPC) or to both national classification and IPC

**B. FIELDS SEARCHED**

Minimum documentation searched (classification system followed by classification symbols)

IPC: G10L

Documentation searched other than minimum documentation to the extent that such documents are included in the fields searched

Electronic data base consulted during the international search (name of data base and, where practicable, search terms used)

CNABS, CNTXT, ENTXTC, WPABSC, ENTXT, CNKI, IEEE: 混合, 合成, 混叠, 语音提取, 语音分离, 聚类, 分割, 声纹, 第一模型, 循环神经网络, 第二模型, 长短期记忆, 位置, 时间戳, 中间结果, 中间输出, 交叉, 融合. mix+, extraction, cluster+, diarization, voiceprint, RNN, BLSTM, LSTM

**C. DOCUMENTS CONSIDERED TO BE RELEVANT**

| Category* | Citation of document, with indication, where appropriate, of the relevant passages | Relevant to claim No. |
|---|---|---|
| PX | CN 116259311 A (HUAWEI TECHNOLOGIES CO., LTD.) 13 June 2023 (2023-06-13) claims 1-23 | 1-23 |
| A | CN 115240688 A (XIDIAN UNIVERSITY) 25 October 2022 (2022-10-25) description, paragraphs 0007-0078, and figures 1-2 | 1-23 |
| A | WO 2022068675 A1 (HUAWEI TECHNOLOGIES CO., LTD. et al.) 07 April 2022 (2022-04-07) entire document | 1-23 |
| A | CN 115116448 A (SICHUAN QIRUIKE TECHNOLOGY CO., LTD.) 27 September 2022 (2022-09-27) entire document | 1-23 |
| A | CN 114974261 A (XIAMEN KUAISHANGTONG TECHNOLOGY CO., LTD.) 30 August 2022 (2022-08-30) entire document | 1-23 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 June 2024** | **05 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/078946** |

### C. DOCUMENTS CONSIDERED TO BE RELEVANT

| Category* | Citation of document, with indication, where appropriate, of the relevant passages | Relevant to claim No. |
|---|---|---|
| A | CN 113436633 A (PING AN TECHNOLOGY (SHENZHEN) CO., LTD.) 24 September 2021 (2021-09-24) <br> entire document | 1-23 |
| A | CN 113345464 A (PING AN TECHNOLOGY (SHENZHEN) CO., LTD.) 03 September 2021 (2021-09-03) <br> entire document | 1-23 |
| A | CN 111613231 A (GUANGZHOU HUIRUISITONG INFORMATION TECHNOLOGY CO., LTD.) 01 September 2020 (2020-09-01) <br> entire document | 1-23 |

Form PCT/ISA/210 (second sheet) (July 2022)

**INTERNATIONAL SEARCH REPORT**
Information on patent family members

| International application No. |
| --- |
| **PCT/CN2024/078946** |

| Patent document cited in search report | | | Publication date (day/month/year) | Patent family member(s) | Publication date (day/month/year) |
| --- | --- | --- | --- | --- | --- |
| CN | 116259311 | A | 13 June 2023 | None | |
| CN | 115240688 | A | 25 October 2022 | None | |
| WO | 2022068675 | A1 | 07 April 2022 | None | |
| CN | 115116448 | A | 27 September 2022 | None | |
| CN | 114974261 | A | 30 August 2022 | None | |
| CN | 113436633 | A | 24 September 2021 | None | |
| CN | 113345464 | A | 03 September 2021 | None | |
| CN | 111613231 | A | 01 September 2020 | None | |

Form PCT/ISA/210 (patent family annex) (July 2022)

**REFERENCES CITED IN THE DESCRIPTION**

**Patent documents cited in the description**

- CN 202310228312